# EUROPEAN PATENT APPLICATION

(11) **EP 4 741 979 A1**
(43) Date of publication of application: **13.05.2026**
(21) Application number: 25213771.6
(22) Date of filing: 05.11.2025
(51) Int. Cl.: G05D 1/622, A01B 69/00

(54) **AUTOMATIC TRAVEL ASSISTANCE SYSTEM**

(30) Priority: 08.11.2024 JP 2024196019
(71) Applicant: KUBOTA CORPORATION, Osaka-shi, Osaka 556-8601 (JP)
(72) Inventor: NAGAI, Reo, Sakai-Shi, Osaka, 5900908 (JP); TAKAKI, Shumpei, Sakai-Shi, Osaka, 5900908 (JP); KITAJIMA, Toshihiro, Sakai-Shi, Osaka, 5900908 (JP)
(74) Representative: Cabinet Beau de Loménie

(57) **Abstract**

An automatic travel assistance system (100) is provided to assist a working vehicle (1) in performing automatic travel. The working vehicle (1) includes a traveling device (5) and a working device (2) to perform work. The automatic travel assistance system (100) includes an input interface (13a, 32, 13b, 13c, 13d) to receive input of vehicle information, and area information. The automatic travel assistance system includes an information processor (11) configured to, based on the vehicle information and the area information, perform a first collision prediction and a second collision prediction that the vehicle body (3) or the working device (2) will collide with the obstacle (Q1, Q2), and plan a travel route (L3) for the working vehicle (1) such that the collision of the traveling device (5), the vehicle body (3), and the working device (2) attached to the vehicle body (3) with the obstacle (Q1, Q2) is avoided.

## Description

### BACKGROUND OF THE INVENTION

### Field of the Invention

The present invention relates to an automatic travel assistance system to assist a working vehicle in performing automatic travel while avoiding a collision with an obstacle.

### Description of the Related Art

Known systems to assist a working vehicle in performing automatic travel (autonomous travel) include a system disclosed in Japanese Unexamined Patent Application Publication No. 2023-25407. In the system disclosed in Japanese Unexamined Patent Application Publication No. 2023-25407, a range sensor measures a distance to an object located at a side of a working device attached to a working vehicle, and a terminal device displays a detection result from the range sensor. While the working vehicle is traveling within agricultural fields based on a planned route, it executes control to ensure the distance measured by the range sensor from the ridge does not fall below a predetermined distance, taking precedence over control to follow the planned route. In addition, a management terminal is disclosed to calculate, based on terrain information relating to a managed passage in a management area and relating to the agricultural fields stored in a database, a travel route for the working vehicle from an installation position of the managing terminal to the entrance/exit of the agricultural fields through the managed passage.

### SUMMARY OF THE INVENTION

There is a desire to cause a working vehicle to efficiently perform automatic travel toward a goal point, such as an agricultural field. It is therefore necessary to avoid a collision between the working vehicle and an obstacle. After the working vehicle detects an obstacle with a sensor or the like, when predetermined operations such as steering, decelerating, and stopping to avoid a collision with the obstacle are suddenly performed, the efficiency of automatic travel decreases. In particular, as the frequency with which the predetermined operations are suddenly performed increases, the efficiency of automatic travel of the working vehicle decreases significantly.

In response to the above issue, it is an object of the present invention to cause a working vehicle to efficiently perform automatic travel toward a goal point.

One example embodiment of the present invention provides an automatic travel assistance system to assist a working vehicle in performing automatic travel. The working vehicle includes a traveling device to cause a vehicle body to travel and is configured to attach thereto a working device to perform work. The automatic travel assistance system includes an input interface to receive input of vehicle information relating to at least one of the vehicle body or the working device and relating to the traveling device, and area information relating to a goal point and at least one obstacle in a predetermined area. The automatic travel assistance system includes an information processor configured to i) based on the vehicle information and the area information, perform a first collision prediction to predict a likelihood that the traveling device will collide with the at least one obstacle in a case where the working vehicle travels in the area toward the goal point, and a second collision prediction to predict a likelihood that at least one of the vehicle body or the working device will collide with the at least one obstacle in the case where the working vehicle travels in the area toward the goal point, and ii) based on the first collision prediction and the second collision prediction, plan a travel route for the working vehicle such that the collision of the traveling device, the vehicle body, and the working device attached to the vehicle body with the at least one obstacle is avoided.

According to the present invention, the working vehicle can efficiently perform the automatic travel while avoiding a collision with an obstacle.

The above and other elements, features, steps, characteristics and advantages of the present invention will become more apparent from the following detailed description of the example embodiments with reference to the attached drawings.

### BRIEF DESCRIPTION OF THE DRAWINGS

A more complete appreciation of example embodiments of the present invention and many of the attendant advantages thereof will be readily obtained as the same becomes better understood by reference to the following detailed description when considered in connection with the accompanying drawings described below.
FIG. 1 is a schematic diagram of an example configuration of an automatic travel assistance system.
FIG. 2 is an example side view of a working vehicle.
FIG. 3 is a block diagram illustrating an example electrical configuration of the working vehicle.
FIG. 4 is a diagram for explaining an example collision prediction process and an example route planning process.
FIG. 5 is a diagram illustrating example models of a traveling device.
FIG. 6 is a diagram illustrating example models of a vehicle body and example models of a working device.
FIG. 7 is a diagram for explaining an example route planning process.
FIG. 8 is a diagram for explaining an example route planning process.
FIG. 9 is a diagram for explaining an example route following process.
FIG. 10 is a diagram for explaining an example route following process.
FIG. 11A is a flowchart illustrating an example operation of the automatic travel assistance system.
FIG. 11B is the flowchart illustrating the example operation of the automatic travel assistance system.

### DESCRIPTION OF THE EXAMPLE EMBODIMENTS

Example embodiments will now be described with reference to the accompanying drawings, wherein like reference numerals designate corresponding or identical elements throughout the various drawings. The drawings are to be viewed in an orientation in which the reference numerals are viewed correctly.

Embodiments of the present invention will be described below with reference to the drawings. It should be noted that, for the sake of convenience, like reference numerals designate identical or corresponding elements.

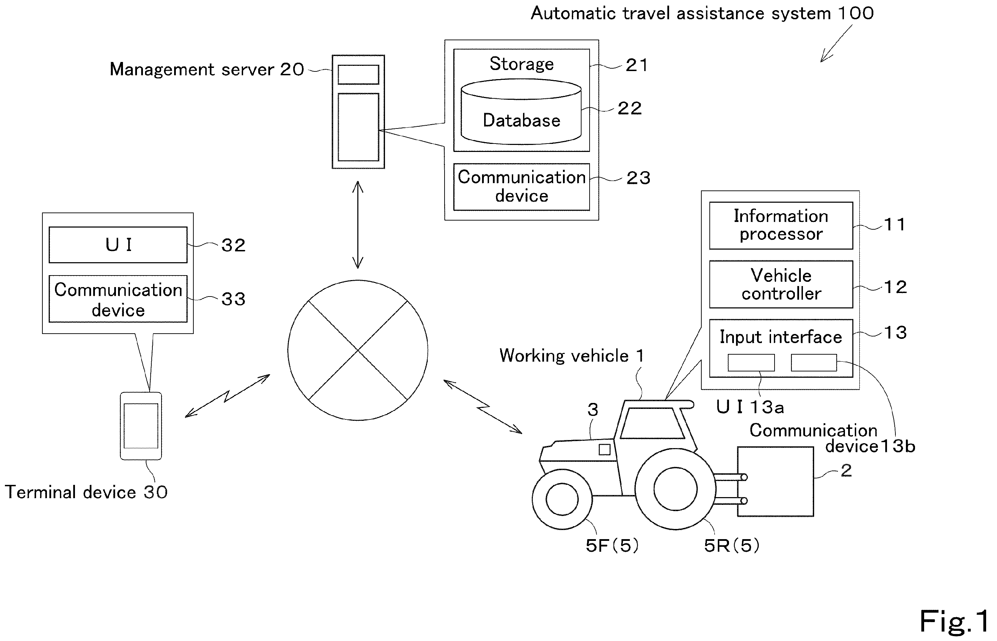

FIG. 1 is a schematic diagram of an example configuration of an automatic travel assistance system 100. The automatic travel assistance system 100 is a system to assist a working vehicle 1 in performing automatic travel (autonomous travel). The automatic travel assistance system 100 includes the working vehicle 1, a management server 20, and a terminal device 30. Although FIG. 1 illustrates one working vehicle 1, one management server 20, and one terminal device 30, the automatic travel assistance system 100 may include one or two or more working vehicles 1, one or two or more management servers 20, and one or two or more terminal devices 30.

The working vehicle 1 includes an agricultural machine (also referred to as an autonomous traveling agricultural machine) configured to autonomously travel and perform work. In the present embodiment, the working vehicle 1 is a tractor as an example agricultural machine to perform agricultural work in agricultural fields. The working vehicle 1 may be an agricultural machine other than a tractor, a construction machine, or a working machine to perform work while traveling outside agricultural fields.

The working vehicle 1 includes an information processor (computer) 11, a vehicle controller 12, and an input interface 13. The vehicle controller 12 includes an electronic control unit (ECU) including a processor and a memory. The vehicle controller 12 is a controller to control operations of components of the working vehicle 1. The input interface 13 is an input interface to receive input of information to the working vehicle 1 and the automatic travel assistance system 100. The input interface 13 includes a user interface 13a and a communication unit (communication interface) 13b. The user interface 13a enables input and output of various pieces of information. The communication unit 13b includes a communication circuit for wireless communication.

The management server 20 is a server or computer provided in a management center or a cloud system. The management server 20 includes a processor, a memory, a storage 21 having a larger capacity than the memory, and a communication unit 23. The storage 21 includes a database 22. The database 22 contains various pieces of information. The management server 20 is configured to communicate with the information processor 11, the vehicle controller 12, and the terminal device 30 through the communication unit 23 via wide-area networks such as a mobile communication network and the Internet. The management server 20 is an input device configured to input information to the working vehicle 1.

The terminal device 30 is a computer used by a manager of the automatic travel assistance system 100 or another user. The terminal device 30 includes a processor, a memory, a user interface 32, and a communication unit 33. The user interface 32 enables input and output of various pieces of information. The terminal device 30 is configured to communicate with the management server 20, the information processor 11, and the vehicle controller 12 through the communication unit 33 via the wide-area networks. The terminal device 30 is an input device configured to input information to the management server 20, the working vehicle 1, and the automatic travel assistance system 100.

The information processor 11 and the vehicle controller 12 of the working vehicle 1 are configured to communicate with the management server 20 and the terminal device 30 through the communication unit 13b via the wide-area networks. In another example, the information processor 11 and the vehicle controller 12 may communicate with the management server 20 and the terminal device 30 through the communication unit 13b via a short-range network such as a wireless local area network (LAN).

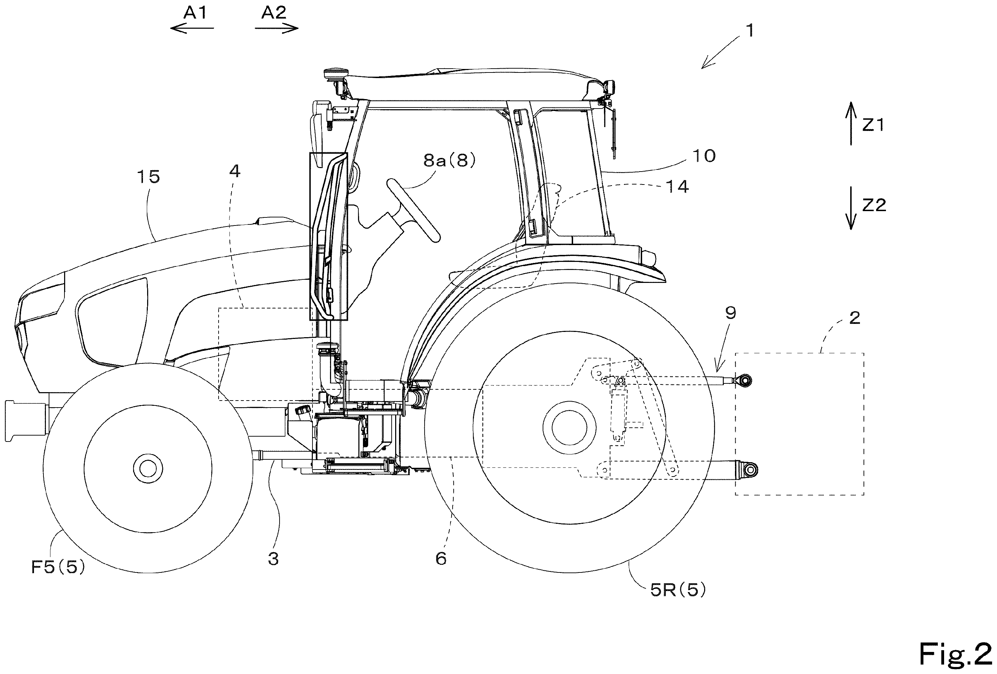

FIG. 2 is an example side view of the working vehicle 1. In FIG. 2, a direction indicated by arrow A1 is a forward direction of the working vehicle 1. A direction indicated by arrow A2 is a rearward direction of the working vehicle 1. A direction indicated by arrow Z1 is an upward direction of the working vehicle 1. A direction indicated by arrow Z2 is a downward direction of the working vehicle 1. A direction orthogonal to arrows A1, A2, Z1, and Z2 is a width direction (left-right direction) of the working vehicle 1. A side closer to the viewer of FIG. 2 is the left of the working vehicle 1. A side farther from the viewer of FIG. 2 is the right of the working vehicle 1.

The working vehicle 1 includes a vehicle body 3, a prime mover 4, a traveling device 5, a transmission 6, a braking device 7, and a steering device 8. The traveling device 5 is provided in or on left and right portions of the vehicle body 3. The traveling device 5 is a track assembly supporting the vehicle body 3 and configured to cause the vehicle body 3 to travel. In the present embodiment, the traveling device 5 is a wheeled type traveling device including at least one front wheel 5F and at least one rear wheel 5R. In another example, the traveling device 5 may be a crawler track type traveling device or may be a composite traveling device including wheels and crawler tracks. In other words, the traveling device 5 is a device including at least one of a wheel or a crawler track and configured to cause the vehicle body 3 to travel.

The prime mover 4, the transmission 6, and the steering device 8 are mounted on the vehicle body 3. The prime mover 4 includes an engine, such as a diesel engine or a gasoline engine, or an electric motor. The transmission 6 includes a hydrostatic transmission (HST) or a hydromechanical transmission (HMT). The transmission 6 performs a speed-stage changing operation to change a propelling force of the traveling device 5 and switches the traveling device 5 between forward movement and rearward movement. The braking device 7 brakes the traveling device 5. The steering device 8 changes the orientation of the front wheel 5F to steer the vehicle body 3.

A cabin 10 is mounted on the vehicle body 3. The cabin 10 contains an operator's seat 14 and a steering wheel 8a. The steering wheel 8a is included in the steering device 8. Additionally, the cabin 10 contains manual operators including levers, pedals, and switches used to drive and operate the working vehicle 1. Although the working vehicle 1 is a tractor configured to perform automatic travel and work without human intervention, an operator sitting in the operator's seat 14 can operate the manual operators to drive the working vehicle 1 manually.

A hood 15 is provided at the front of the cabin 10. The hood 15 is attached to the vehicle body 3. The hood 15 and the vehicle body 3 define a compartment (not designated by a reference numeral) therebetween. The compartment contains not only the prime mover 4 but also a cooling fan, a radiator, a battery, and the like (not illustrated).

A coupling device 9 is provided in or on a rear portion of the vehicle body 3. The coupling device 9 is, for example, a three-point linkage. The coupling device 9 may be another coupling device, such as a drawbar. A working device 2 to perform work is attachable to and detachable from the coupling device 9. In other words, the working device 2 is attached to the rear of the vehicle body 3 with the coupling device 9. Driving the traveling device 5 with the working device 2 coupled to the coupling device 9 allows the working vehicle 1 (vehicle body 3) to travel, thus moving the working device 2. Additionally, the coupling device 9 can also raise and lower the working device 2 and change the posture (vertical position and orientation) of the working device 2.

The working device 2 includes an implement, such as a cultivator for cultivation, a fertilizer spreader to spread fertilizer, an agricultural chemical spreader to spread agricultural chemicals, a harvester for harvesting, a mower to mow grass or the like, a tedder to ted grass or the like, a rake to rake grass or the like, or a baler to bale grass or the like.

Examples of the working device 2 which can be used with the working vehicle 1 include a working device 2 having a width wider than the width of the working vehicle 1 (vehicle body 3), a towed working device 2 with wheels, and a mounted working device 2 supported by the working vehicle 1 via the coupling device 9. Examples of the mounted working device 2 include a working device 2 to perform work while being in contact with the ground and a working device 2 to perform work while being not in contact with the ground. In a case where the working device 2 to perform work while being in contact with the ground is coupled to the coupling device 9, when the working vehicle 1 performs work, the coupling device 9 lowers the working device 2 and sets the working device 2 to a ground-contact position. When the working vehicle 1 travels without performing work, the coupling device 9 raises the working device 2 and sets the working device 2 to a non-ground-contact position (at a certain height above the ground surface).

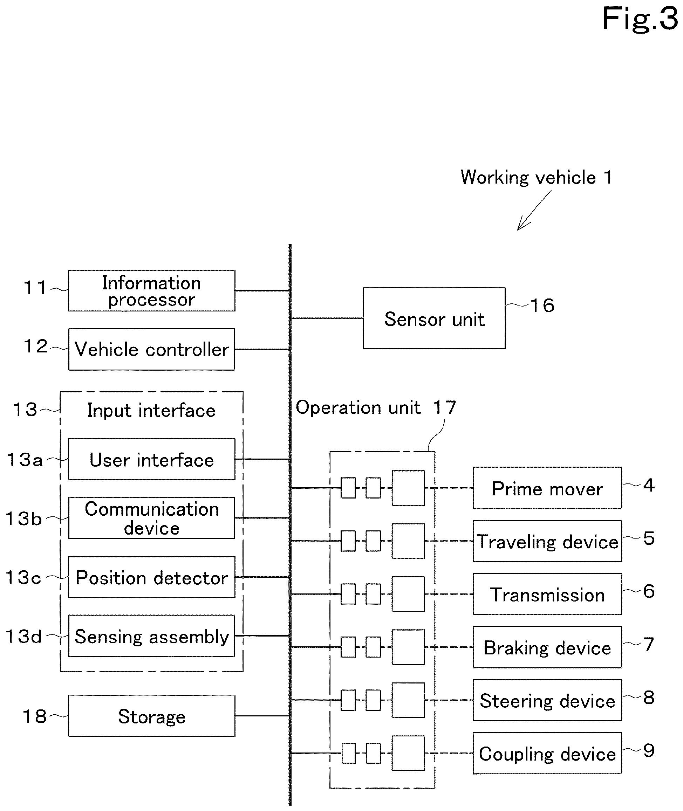

FIG. 3 is a block diagram illustrating an example electrical configuration of the working vehicle 1. The working vehicle 1 includes, in addition to the above-described components, a position detector or positioning device 13c, a sensing assembly 13d, a sensor unit/assembly 16, an operation unit/assembly 17, and a storage 18. The position detector 13c and the sensing assembly 13d are included, together with the user interface 13a and the communication unit 13b, in the input interface 13.

The information processor 11, the vehicle controller 12, the input interface 13, the sensor unit 16, and the storage 18 are electrically connected via an in-vehicle network based on CAN, LIN, FlexRay, or the like in the working vehicle 1. The operation unit 17 is connected to the vehicle controller 12.

Internal memories of the information processor 11 and the vehicle controller 12 include a volatile memory and a nonvolatile memory. The storage 18 includes a memory drive, such as a solid-state drive (SSD). These internal memories and the storage 18 store various pieces of information, data, and software programs to cause the working vehicle 1 to perform automatic travel. Additionally, the information processor 11 and the vehicle controller 12 appropriately cause the internal memories or the storage 18 to store information.

The user interface 13a is, for example, a touchscreen including a display or a tablet type terminal device (computer). The user interface 13a is installed near the operator's seat 14 in the cabin 10 (FIG. 2). The information processor 11 and the vehicle controller 12 cause the user interface 13a to output (display) various pieces of information relating to the working vehicle 1 stored in the internal memories. Additionally, an operator or the like of the working vehicle 1 inputs various pieces of information through the user interface 13a. The user interface 13a functions as an input interface and also functions as an output interface.

The communication unit 13b includes not only the communication circuit for wireless communication with the management server 20 and the terminal device 30 but also an interface for communication with the information processor 11 and the vehicle controller 12 via the in-vehicle network in the working vehicle 1. The communication unit 13b serves as an input interface and also serves as an output interface.

The position detector 13c includes a positioning device including a global navigation satellite system (GNSS) receiver. The position detector 13c detects its own position (measured position information including a latitude and a longitude) using a satellite positioning system. More specifically, the position detector 13c receives signals from positioning satellites, the signals indicating the positions of the positioning satellites, transmission times, and correction information, and detects its own position based on the signals. The position detector 13c may detect, as its own position, a position corrected based on a signal for correction or the like from a base station (reference station) configured to receive signals from the positioning satellites.

Additionally, the position detector 13c may include an inertial measurement unit (inertial sensor) such as a gyroscope sensor or an acceleration sensor. In this case, the position detector 13c may correct a position (latitude, longitude) detected based on signals received from the positioning satellites through the inertial measurement unit and detect the corrected position as its own position.

The information processor 11 and the vehicle controller 12 regard the position detected by the position detector 13c as the position of the vehicle body 3 of the working vehicle 1. In other words, the position detector 13c detects the position of the vehicle body 3 (working vehicle 1). Additionally, the information processor 11 and the vehicle controller 12 calculate the positions of the vehicle body 3, the traveling device 5, and the working device 2 based on the position detected by the position detector 13c and previously stored information (profile information) indicating the size of the vehicle body 3 of the working vehicle 1, the size of the traveling device 5, and the size of the working device 2.

The sensing assembly 13d includes a laser sensor, an ultrasonic sensor, and a camera (imager). The laser sensor, the ultrasonic sensor, and the camera are installed at appropriate positions, such as front, rear, left, right, upper, and lower portions of the working vehicle 1, to detect a state around the working vehicle 1 and the working device 2. The sensing assembly 13d may include at least one of the laser sensor, the ultrasonic sensor, or the camera. Additionally, the sensing assembly 13d may include a detector such as a sensor other than the above sensors.

The sensing assembly 13d senses a region within a first distance from the working vehicle 1 through the laser sensor, the ultrasonic sensor, and the camera. More specifically, the sensing assembly 13d detects objects including an obstacle and a non-obstacle in the region. Additionally, the sensing assembly 13d calculates a distance to an object based on a detection result from the laser sensor and a detection result from the ultrasonic sensor. An obstacle refers to a tangible or intangible object that obstructs travel of the working vehicle 1. Obstacles include predetermined natural objects, artificial objects, ditches, depressions, humans, animals, and the like that occupy a space. Additionally, places such as ground surfaces and agricultural fields on which the working vehicle 1 is prohibited from traveling are also included in the obstacles. Although places such as ground surfaces and agricultural fields on which the working vehicle 1 is permitted to travel may be excluded from the obstacles, information indicating such places may be included in area information.

The sensor unit 16 includes various sensors installed in or on portions of the working vehicle 1 and portions of the working device 2. The information processor 11 and the vehicle controller 12 determine an operation state of the working vehicle 1 and an operation state of the working device 2 based on signals output from the various sensors of the sensor unit 16. The operation state of the working vehicle 1 determined by the information processor 11 and the vehicle controller 12 includes driving and/or stopping states of the components of the working vehicle 1, a traveling direction of the working vehicle 1 (vehicle body 3), a traveling speed thereof, an acceleration thereof, and the attitude (pitch angle, roll angle, and yaw angle (orientation, direction)) thereof. Additionally, the operation state of the working device 2 includes driving and/or stopping states of components of the working device 2 and the posture (at least a vertical position) of the working device 2.

In another example, the information processor 11 and the vehicle controller 12 may cause the position detector 13c to detect the position of the vehicle body 3 at predetermined intervals and detect (calculate) the traveling direction, traveling speed, acceleration, and attitude of the working vehicle 1 (vehicle body 3) based on time-series data on the position of the vehicle body 3. Alternatively, the information processor 11 and the vehicle controller 12 may detect the traveling direction, traveling speed, acceleration, and attitude of the working vehicle 1 based on a measurement result from the inertial measurement unit of the position detector 13c. Alternatively, the working vehicle 1 may include a rotational speed sensor configured to detect either a rotational speed of the wheels 5F and 5R of the traveling device 5 or a rotational speed or a RPM sensor of a traveling motor to rotate the wheels 5F and 5R and a rotating direction. The information processor 11 and the vehicle controller 12 may detect the traveling direction, traveling speed, and acceleration of the working vehicle 1 based on a signal output from the rotational speed sensor.

The operation unit/assembly 17 includes a plurality of manual operators, a plurality of driving circuits, and a plurality of actuators used to actuate the prime mover 4, the traveling device 5, the transmission 6, the braking device 7, the steering device 8, and the coupling device 9. The manual operators include a plurality of operation members to be operated by an operator or a driver of the working vehicle 1 and a plurality of sensors configured to detect at least one of the presence or absence of operation on each of the operation members, an operating direction of the operation member, or the amount of operation on the operation member.

The actuators of the operation unit/assembly 17 are hydraulic actuators, such as a hydraulic motor and a hydraulic cylinder. To actuate the hydraulic actuators, the operation unit 17 includes a hydraulic circuit (driving circuit). The hydraulic circuit includes a hydraulic pump, a hydraulic motor, a hydraulic pilot-operated valve, and an electromagnetic control valve.

In another example, at least one of the actuators of the operation unit 17 may be an electric actuator, such as a servo motor or a servo cylinder. To actuate the electric actuator, the operation unit/assembly 17 may include an electric circuit (driving circuit). The electric circuit may include a semiconductor device.

The vehicle controller 12 actuates each of the actuators included in the operation unit 17 to drive or actuate the corresponding one of the prime mover 4, the traveling device 5, the transmission 6, the braking device 7, the steering device 8, and the coupling device 9. Additionally, the vehicle controller 12 controls actuation of the prime mover 4, the traveling device 5, the transmission 6, the braking device 7, and the steering device 8 through the operation unit 17 to cause the working vehicle 1 to travel, and also controls the travel (traveling speed and steering) to perform automatic travel of the working vehicle 1. In other words, the vehicle controller 12 controls actuation of the prime mover 4, the traveling device 5, the transmission 6, the braking device 7, and the steering device 8 through the operation unit 17 to perform the automatic travel such that starting and stopping of travel of the working vehicle 1, changing of the traveling speed, and steering are automatically controlled. Additionally, the vehicle controller 12 actuates the coupling device 9 through the corresponding actuator to raise or lower the working device 2 coupled to the coupling device 9.

The storage 18 of the working vehicle 1 stores vehicle information relating to the working vehicle 1. The vehicle information includes identification information of the working vehicle 1 and information relating to the vehicle body 3, the traveling device 5, and the working device 2. More specifically, the identification information of the working vehicle 1 is, for example, the model number of the working vehicle 1. The information relating to the vehicle body 3 and the traveling device 5 includes pieces of information indicating the size (outer shape) of the vehicle body 3, the type and size of the traveling device 5, the position of the traveling device 5 relative to the vehicle body 3, and the height (vertical position) of the vehicle body 3 from the bottom of the traveling device 5. The information indicating the size of the traveling device 5 includes information indicating the height of the traveling device 5, or the height thereof from the bottom of the traveling device 5.

Examples of the type of the traveling device 5 include a wheeled type traveling device including wheels as ground-contacting portions, a crawler track type traveling device including crawler tracks as ground-contacting portions, and a composite traveling device including wheels and crawler tracks as ground-contacting portions. In a case where the traveling device 5 is of a wheeled type or a composite type, the information indicating the size of the traveling device 5 includes the width and diameter of wheels and the tread width of a pair of left and right wheels. In a case where the traveling device 5 is of a crawler track type or a composite type, the information indicating the size of the traveling device 5 includes the dimensions of crawler tracks along three orthogonal axes and the distance between a pair of left and right crawler tracks.

The information relating to the working device 2 included in the vehicle information includes pieces of device information set for a plurality of working devices 2 usable with the working vehicle 1. Each of the pieces of device information includes pieces of information indicating the type and size (outer shape) of the working device 2, the position of the working device 2 relative to the vehicle body 3, and the height of the working device 2 from the bottom of the traveling device 5.

For the above-described information, information relating to at least one of the vehicle body 3 or the working device 2 may be included in the vehicle information. More specifically, the vehicle information may include pieces of information indicating the size of at least one of the vehicle body 3 or the working device 2 and the height of at least one of the vehicle body 3 or the working device 2 from the bottom of the traveling device 5. In addition, for example, if the working device 2 is not attached to the vehicle body 3, the vehicle information may exclude information indicating the position of the working device 2 relative to the vehicle body 3.

Additionally, for example, an operator may directly input vehicle information through the user interface 13a. Alternatively, after the operator inputs vehicle information through the user interface 32 of the terminal device 30, the vehicle information may be input to the in-vehicle network in the working vehicle 1 from the terminal device 30 in a wireless or wired manner or via a storage medium. The vehicle information input in this manner may be stored in the storage 18 by the information processor 11. Additionally, the information processor 11 may cause the communication unit 13b to transmit input vehicle information to the management server 20, and the management server 20 may receive the vehicle information and store the information in the database 22.

Alternatively, the terminal device 30 may transmit vehicle information to the management server 20 through the user interface 32 and the communication unit 33, and the management server 20 may receive the vehicle information through the communication unit 23 and store the information in the database 22. The information processor 11 may communicate with the management server 20 through the communication unit 13b, receive (acquire) vehicle information associated with the working vehicle 1 through the communication unit 13b, and store the vehicle information in the storage 18.

Additionally, after any working device 2 is coupled to the coupling device 9 of the working vehicle 1, the operator may input information indicating the coupled working device 2 through the user interface 13a. The information processor 11 may select device information associated with the input information from vehicle information stored in the storage 18.

Alternatively, if the working device 2 includes an ECU including a central processing unit (CPU) and a memory, the ECU may be connected to the in-vehicle network in the working vehicle 1 in a wireless or wired manner, and identification information of the working device 2 may be input to the in-vehicle network from the ECU. The information processor 11 may select device information associated with the input identification information from vehicle information stored in the storage 18. Alternatively, device information on the working device 2 may be input to the in-vehicle network from the ECU, and the information processor 11 may select the device information and store the device information in the storage 18.

The storage 18 of the working vehicle 1 stores one or more pieces of area information relating to one or more predetermined areas in which the working vehicle 1 travels. Area information includes map information on a predetermined area. The map information includes pieces of information relating to a goal point, a passage, at least one obstacle, and the like (another object) in the predetermined area. Information relating to a goal point includes information indicating the position (coordinates) of the goal point in a predetermined area. Information relating to a passage includes pieces of information indicating the positions of passages, such as a paved road and an unpaved agricultural road, in a predetermined area, the sizes (lengths and widths) of the passages, and the gradients of the passages. Information relating to at least one obstacle includes pieces of information indicating the type, size, and position of the at least one obstacle in a predetermined area and the height of the at least one obstacle from the ground surface.

Information relating to at least one obstacle may be extracted from a sensing result, such as an image captured through the sensing assembly 13d or the like in a predetermined area during previous travel of the working vehicle 1 or the like, by at least one of an operator, a computer, or artificial intelligence (AI). Alternatively, at least one of the operator, the computer, or the AI may extract the information relating to at least one obstacle from an application program that handles pieces of information indicating terrain, a map, and the like of a predetermined area.

The area information may be generated by, for example, the terminal device 30, may be stored in the database 22 of the management server 20, may be acquired by the communication unit 13b, and may be stored in the storage 18 by the information processor 11.

For example, map information on a plurality of areas is stored in the database 22 of the management server 20. An operator inputs information indicating a desired area through the user interface 32 of the terminal device 30 to designate the area. In response to the input, the terminal device 30 communicates with the management server 20 through the communication unit 33 to acquire (receive) map information associated with the information from the database 22 through the management server 20 or the like, and outputs (displays) the acquired map information through the user interface 32. Thus, the map of the desired area is displayed on a display of the user interface 32 such that objects representing known passages, obstacles, and the like are displayed on the map.

In a case where an object representing a new passage or an obstacle that the operator has recognized is not displayed on the map of the area displayed by the user interface 32, the operator inputs information relating to the new passage or the obstacle through the user interface 32. The terminal device 30 causes, based on the input information, an object representing the new passage or the obstacle to be displayed on the map of the area displayed by the user interface 32. Additionally, the operator sets (inputs) a goal point for the working vehicle 1 on the displayed map of the area through the user interface 32. The terminal device 30 causes the user interface 32 to display an object representing the set goal point on the map of the area.

Then, when the operator performs a predetermined confirmation or submission operation through the user interface 32, the terminal device 30 causes the information relating to the new passage or the obstacle and information relating to the goal point to be included in map information on the area to generate area information including the map information, and transmits the area information to the management server 20 through the communication unit 33. The management server 20 stores the area information received from the terminal device 30 in the database 22. After that, the area information may be updated by the terminal device 30 in a manner similar to the above-described manner. The updated area information may be stored in the database 22.

In the working vehicle 1, when an operator designates a desired area by inputting information indicating the area through the user interface 13a, the information processor 11 communicates with the management server 20 through the communication unit 13b to acquire (receive) area information associated with the desired area from the management server 20 and stores the acquired area information in the storage 18.

In another example, area information may be input to the in-vehicle network in the working vehicle 1 from the terminal device 30 in a wireless or wired manner or via a storage medium without passing through the management server 20. The information processor 11 may store the area information in the storage 18. Alternatively, the operator may acquire map information on a desired area from the database 22 through the user interface 13a, the information processor 11, the communication unit 13b, and the like of the working vehicle 1. The operator may generate area information through the user interface 13a, the information processor 11, the communication unit 13b, and the like, cause the storage 18 to store the area information, and store the area information in the database 22. Additionally, of the information included in the area information, information indicating a goal point may be input by the operator through the user interface 13a of the working vehicle 1.

Additionally, area information may include identification information of a device that generated the area information, identification information of a device that updated the area information, and time information such as timestamps indicating a date and time when the area information was generated and a date and time when the area information was updated.

Additionally, area information may include information indicating a planned route for the working vehicle 1 toward a goal point. For example, the information processor 11 may plan a planned route based on area information and cause the area information to include information indicating the planned route. Alternatively, the terminal device 30 may plan a planned route based on area information and cause the area information to include information indicating the planned route. Alternatively, the information processor 11 may receive information indicating a planned route planned by the terminal device 30 and add the received information to area information stored in the storage 18. Alternatively, the operator may plan a planned route and input information indicating the planned route through either the user interface 32 of the terminal device 30 or the user interface 13a of the working vehicle 1. Either the terminal device 30 or the information processor 11 may cause the input information indicating the planned route to be included in area information.

To plan a planned route, for example, a vehicle model representing the working vehicle 1 and the working device 2 attached to the working vehicle 1 in a plan view is positioned on a map of an area. A planned route for the vehicle model toward a goal point is created based on a predetermined condition such that a collision with an obstacle is avoided. The predetermined condition includes a condition in which at least one of the shortest possible travel time taken for the working vehicle 1 to reach the goal point or the shortest possible travel distance traveled by the working vehicle 1 to reach the goal point is achieved. In addition to this condition, the predetermined condition may include a condition in which the working vehicle 1 travels in a place where, for example, the working vehicle 1 is permitted to travel. It should be noted that the place where the working vehicle 1 is permitted to travel is a predetermined place and includes not only passages indicated by map information on an area but also land other than the passages.

The starting point of a planned route may be the current position of the working vehicle 1 (vehicle body 3) detected by the position detector 13c or may be a predetermined home position, such as a garage for the working vehicle 1. The end point of the planned route is a goal point. The goal point is, for example, an agricultural field where the working vehicle 1 is to perform work. In the present embodiment, a predetermined area is an area including an agricultural field and places other than the agricultural field. The planned route is a route along which the working vehicle 1 travels in the places other than the agricultural field in the area toward the goal point while the working device 2 is not performing work. The same applies to other routes, which will be described later.

The operator inputs information indicating a desired area through the user interface 13a to designate the area. In response to the input, the information processor 11 and the vehicle controller 12 read area information associated with the input information and vehicle information from the storage 18. The information processor 11 causes the user interface 13a to display, based on the area information, a map of the area showing a goal point, a planned route to the goal point, and the like.

The operator looks at the map of the area and performs, through at least one of the user interface 13a or any manual operator of the operation unit 17, a predetermined travel start operation to cause the working vehicle 1 to perform automatic travel toward the goal point. Thus, the vehicle controller 12 starts the automatic travel of the working vehicle 1 based on the planned route.

More specifically, the vehicle controller 12 controls, based on the planned route and the vehicle body 3 (working vehicle 1) detected by the position detector 13c, actuation of the prime mover 4, the traveling device 5, the transmission 6, the braking device 7, and the steering device 8 through the operation unit 17, thus causing the working vehicle 1 to travel. In other words, the vehicle controller 12 controls travel (traveling speed, steering, and the like) of the working vehicle 1 such that the working vehicle 1 moves along the planned route to perform the automatic travel. Additionally, the vehicle controller 12 performs the automatic travel with reference to vehicle information and a sensing result from the sensing assembly 13d and further based on such information, and controls traveling, stopping, a traveling speed, and steering of the working vehicle 1 to avoid a collision with an obstacle detected by the sensing assembly 13d.

When a desired area is designated through the user interface 13a and a map of the area is displayed by the user interface 13a, the operator may set a goal point on the map of the area through the user interface 13a. Then, the information processor 11 may create (plan) a planned route toward the goal point from the current position of the vehicle body 3.

As described above, the operator designates a desired area and performs the predetermined travel start operation. Thus, the information processor 11 performs, based on vehicle information, area information, and the like, a prediction to predict a likelihood that the traveling device 5 will collide with at least one obstacle in a case where the working vehicle 1 travels toward the goal point and a prediction to predict a likelihood that at least one of the vehicle body 3 or the working device 2 will collide with the at least one obstacle in the case where the working vehicle 1 travels toward the goal point. Additionally, the information processor 11 plans (creates), based on the above predictions, a travel route for the working vehicle 1 such that the collision of the traveling device 5, the vehicle body 3, and the working device 2 with the at least one obstacle is avoided, and outputs information indicating the travel route to the vehicle controller 12.

When the travel route is output from the information processor 11, the vehicle controller 12 controls travel of the working vehicle 1 to perform the automatic travel based on the travel route instead of the planned route. In other words, the vehicle controller 12 controls, based on the travel route, the position of the vehicle body 3, and the like (vehicle information and a sensing result from the sensing assembly 13d), travel of the working vehicle 1 through the operation unit 17, the prime mover 4, the traveling device 5, the transmission 6, the braking device 7, and the steering device 8 to perform the automatic travel of the working vehicle 1 toward the goal point.

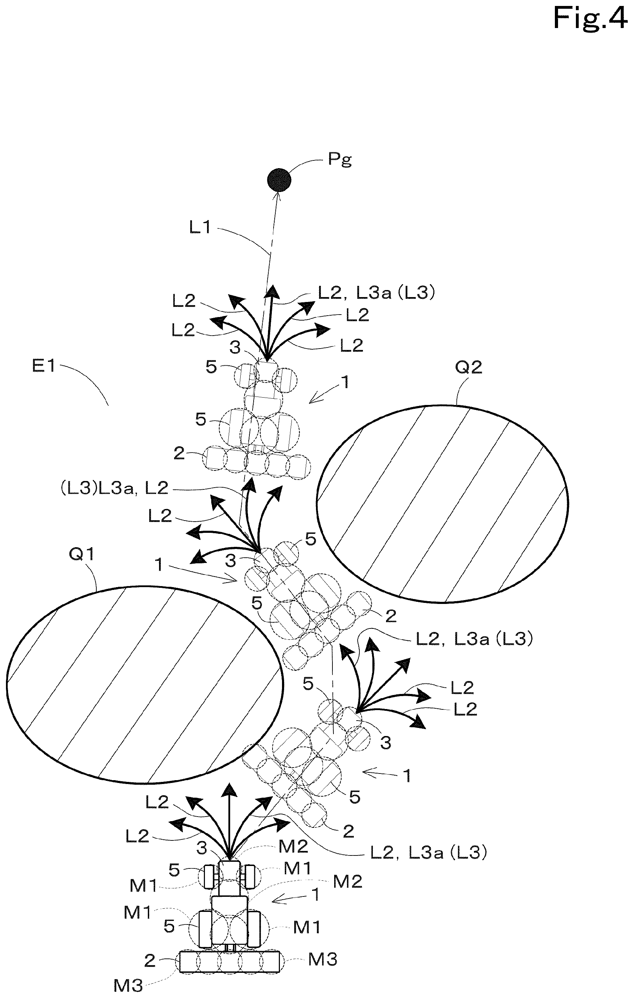

The information processor 11 performs a collision prediction process and a route planning process to plan a travel route. FIG. 4 is a diagram for explaining an example collision prediction process and an example route planning process. In the collision prediction process, the information processor 11 reads, from area information, a map of an area E1, the position of a goal point Pg, the position of a passage, and the types, sizes, positions, and the like of obstacles Q1 and Q2. Additionally, the information processor 11 reads a planned route L1 from the area information. Additionally, the information processor 11 reads, from vehicle information, the size of the working vehicle 1 and the size, position, and the like of each of the vehicle body 3 of the working vehicle 1, the traveling device 5 included in the working vehicle 1, and the working device 2 attached to the working vehicle 1.

Then, the information processor 11 models at least the vehicle body 3, the traveling device 5, and the working device 2 in a plan view by covering respective plan views of these components with a plurality of circles of appropriate sizes, as illustrated in FIG. 4. Additionally, the information processor 11 associates, with respective models M1, M2, and M3 of the vehicle body 3, the traveling device 5, and the working device 2, information indicating not only sizes in a planar direction (horizontal plane) but also sizes (heights from the bottom of the traveling device 5) in an up-down direction (vertical direction).

The obstacle Q1 is an obstacle at a position lower than the vehicle body 3 and the working device 2. The obstacle Q2 is an obstacle at a height equivalent to at least one of the vehicle body 3 or the working device 2 or at a position higher than at least one of the vehicle body 3 or the working device 2. Examples of the obstacles Q1 and Q2 include an obstacle that is in contact with the ground and an obstacle that is not directly in contact with the ground.

At least the wheels 5F and 5R or the crawler tracks of the traveling device 5 of the working vehicle 1 are constantly in contact with the ground. The vehicle body 3, which is supported by at least the wheels 5F and 5R or the crawler tracks, is not constantly in contact with the ground. The working device 2 of a type other than a towed type is not in contact with the ground at least while the working vehicle 1 is traveling without performing work. The working device 2 of a towed type maintains its wheels in contact with the ground even while the working vehicle 1 is traveling without performing work, but at least portions of the working device 2 protruding laterally beyond the vehicle body 3 are not in contact with the ground.

The information processor 11 performs, based on information relating to the vehicle body 3, the traveling device 5, and the working device 2 included in the vehicle information, the area information, and the like, a first collision prediction to predict a likelihood that the traveling device 5 will collide with at least one obstacle Q1 or Q2 and a second collision prediction to predict a likelihood that the vehicle body 3 and the working device 2 will collide with the at least one obstacle Q1 or Q2. The first collision prediction is a process of predicting a likelihood of collision between the working vehicle 1 and the at least one obstacle Q1 or Q2 at the ground surface. The information processor 11 performs the first collision prediction including predicting a likelihood that at least one of the wheel 5F or 5R or the crawler track of the traveling device 5 will collide with the at least one obstacle Q1 or Q2. The second collision prediction is a process of predicting a likelihood of collision between the working vehicle 1 and the at least one obstacle Q1 or Q2 above the ground surface. The information processor 11 performs the second collision prediction including predicting a likelihood that at least one of the vehicle body 3 or the working device 2 will collide with the at least one obstacle Q1 or Q2.

The embodiment will describe an example in which the information processor 11 performs the second collision prediction including predicting the likelihood that the vehicle body 3 and the working device 2 will collide with the at least one obstacle Q1 or Q2. In another embodiment, the information processor 11 may perform the second collision prediction including predicting a likelihood that the vehicle body 3 will collide with the at least one obstacle Q1 or Q2.

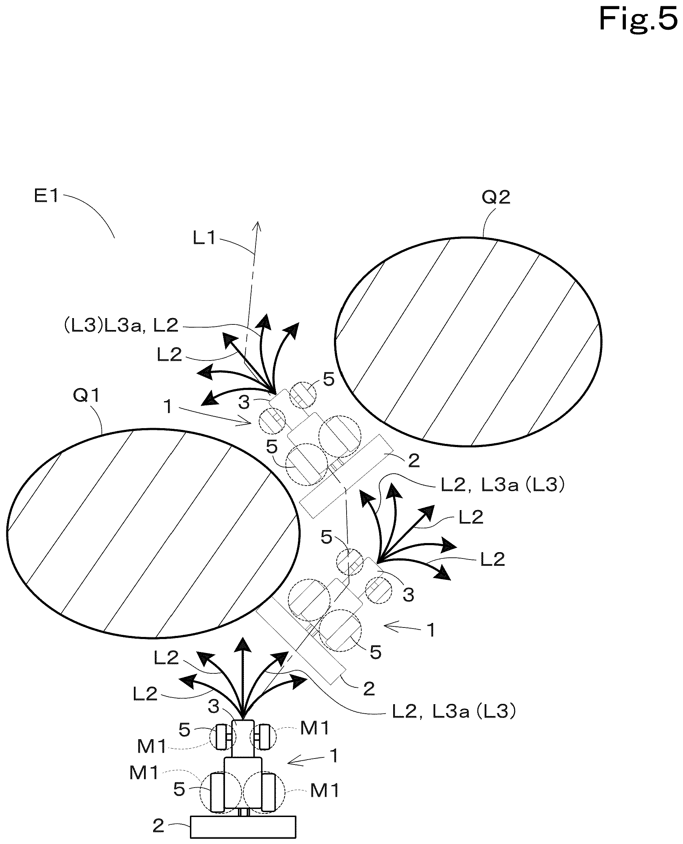

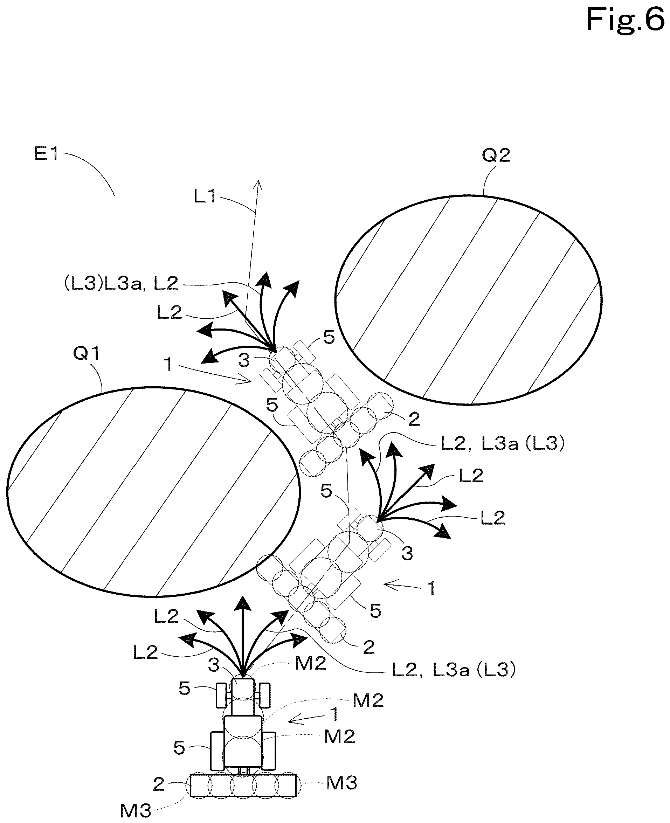

In the first collision prediction, as illustrated in FIG. 5, the information processor 11 predicts whether the first model M1, which is the model of the traveling device 5 (wheels 5F and 5R), will collide with the at least one obstacle Q1 or Q2. Additionally, in the second collision prediction, as illustrated in FIG. 6, the information processor 11 predicts whether the second model M2, which is the model of the vehicle body 3 (including the cabin 10), and the third model M3, which is the model of the working device 2, will collide with the at least one obstacle Q1 or Q2. At this time, the information processor 11 performs, with reference to not only the sizes of the traveling device 5, the vehicle body 3, the working device 2, and the obstacles Q1 and Q2 in the planar direction but also the heights thereof from the ground surface, the first collision prediction including predicting whether the traveling device 5 will collide with the at least one obstacle Q1 or Q2 and the second collision prediction including predicting whether the vehicle body 3 and the working device 2 will collide with the at least one obstacle Q1 or Q2.

Additionally, the information processor 11 may perform the first collision prediction and the second collision prediction based on, in addition to the vehicle information and the area information, at least one of the planned route L1 (indicated by a dot-dash line in FIGS. 5 and 6), the position of the vehicle body 3 detected by the position detector 13c, or a sensing result from the sensing assembly 13d. For example, the information processor 11 performs the first collision prediction and the second collision prediction in a region within a predetermined distance from at least one of the planned route L1 or the current position of the vehicle body 3. Additionally, the information processor 11 detects the presence or absence of the at least one obstacle Q1 or Q2 actually located around the working vehicle 1 based on the sensing result from the sensing assembly 13d to perform the first collision prediction and the second collision prediction.

Subsequently, the information processor 11 performs the route planning process. The route planning process is a process of creating route segments each having a predetermined length to the goal point based on map information on the area so that the working vehicle 1 can travel along the route segments without colliding (coming into contact) with an obstacle. In the present embodiment, the route planning process uses a hybrid A-star algorithm. The route planning process may use a technique other than this algorithm.

In the route planning process, the information processor 11 creates, based on the first collision prediction and the second collision prediction, a plurality of provisional route segments L2 extending in different directions and each extending by a second distance such that the collision of the traveling device 5, the vehicle body 3, and the working device 2 with the at least one obstacle Q1 or Q2 is avoided (FIG. 4). At this time, the information processor 11 changes the steering angle of the working vehicle 1 within a predetermined angular range to create the provisional route segments L2 ahead of the current position of the models M1 to M3 (the position of the vehicle body 3 or the like) (in the traveling direction of the working vehicle 1) so that the working vehicle 1 can travel by the second distance and the models M1 to M3 will not collide with the at least one obstacle Q1 or Q2. The second distance may be set to be shorter than the first distance in which the sensing assembly 13d senses a region.

The information processor 11 then selects any one of the provisional route segments L2 based on a predetermined condition and determines that the selected provisional route segment L2 is a local route segment L3a of a travel route L3. This predetermined condition is the same as that used to plan the planned route L1. In other words, the predetermined condition used to determine the local route segment L3a also includes the condition in which at least one of the shortest possible travel time taken for the working vehicle 1 to reach the goal point Pg or the shortest possible travel distance traveled by the working vehicle 1 to reach the goal point Pg is achieved. Thus, one of the provisional route segments L2 that is the most efficient for the working vehicle 1 to travel toward the goal point Pg is selected as the local route segment L3a. The starting point of the local route segment L3a may be set to the center of the vehicle body 3, the center of the tread width of the left and right rear wheels 5R, or the like.

If the predetermined condition includes a condition in which both the shortest possible travel time and the shortest possible travel distance are achieved, which of the shortest possible travel time and the shortest possible travel distance is to be prioritized may be defined. Additionally, to satisfy the predetermined condition, for example, the information processor 11 may select one of the provisional route segments L2 that is the closest to the planned route L1.

Upon determining the local route segment L3a, the information processor 11 moves the models M1 to M3 to the end point (distal end) of the local route segment L3a. The information processor 11 then determines the next local route segment L3a following the determined local route segment L3a in the above-described manner. As described above, the information processor 11 repeats determining the next local route segment L3a following the determined local route segment L3a one or more times to plan (complete) the travel route L3 to the goal point Pg.

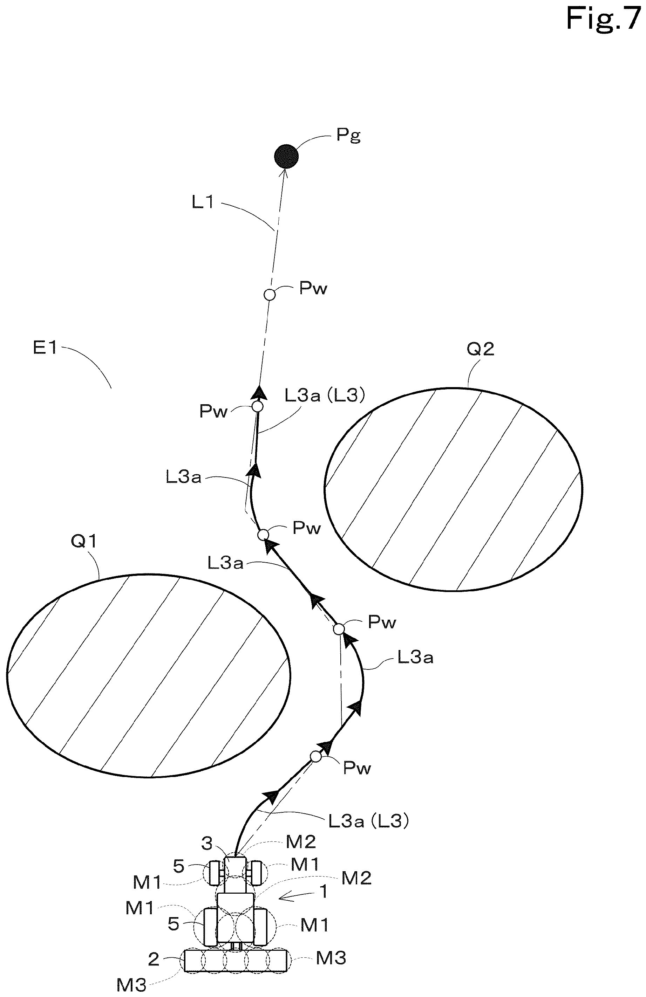

Additionally, the information processor 11 plans the travel route L3 based on the first collision prediction and the second collision prediction such that the travel route L3 passes through a plurality of via points (waypoints) Pw on the planned route L1, as illustrated in FIG. 7. In other words, the information processor 11 sets each of the via points Pw on the planned route L1 to a local goal, determines each of the local route segments L3a such that the local route segment L3a reaches the local goal, and connects the local route segments L3a. For this purpose, the information processor 11 selects, as the local route segment L3a, one of the provisional route segments L2 mentioned above that is the optimum for the via point Pw.

The information processor 11 may plan the travel route L3 such that the travel route L3 passes through all the via points Pw on the planned route L1 or may plan the travel route L3 such that the travel route L3 passes through one or more via points Pw that are a subset of all the via points Pw.

Additionally, for example, upon determining a plurality of local route segments L3a to any via point Pw, the information processor 11 outputs information indicating the local route segments L3a to the vehicle controller 12. Alternatively, each time the information processor 11 determines a predetermined number of local route segments L3a, the information processor 11 may output information indicating the predetermined number of local route segments L3a to the vehicle controller 12. The vehicle controller 12 controls travel of the working vehicle 1 based on the local route segments L3a output from the information processor 11 to continue the automatic travel.

As described above, the information processor 11 repeatedly performs the first collision prediction, the second collision prediction, creation of the provisional route segments L2, and determination and output of the local route segments L3a. The vehicle controller 12 continuously performs the automatic travel of the working vehicle 1 based on the local route segments L3a output successively from the information processor 11.

When the information processor 11 fails to create any provisional route segment L2 that allows the models M1 to M3 to avoid a collision with the at least one obstacle Q1 or Q2 before the working vehicle 1 reaches the goal point Pg, the information processor 11 outputs a stop command to stop the automatic travel of the working vehicle 1 to the vehicle controller 12. In response to receiving the stop command, the vehicle controller 12 stops the automatic travel of the working vehicle 1 to halt the working vehicle 1.

In another example, when the information processor 11 fails to create any provisional route segment L2 before the working vehicle 1 reaches the goal point Pg, the information processor 11 may return the models M1 to M3 to the starting point of the most recently determined local route segment L3a. Then, the information processor 11 may select another one of the most recently created provisional route segments L2 and determine the selected provisional route segment L2 as a local route segment L3a again to create a new plurality of provisional route segments L2.

As described above, the information processor 11 extends, based on the first collision prediction, the second collision prediction, the predetermined condition, and the like (including the vehicle information and the area information), the travel route L3 for the working vehicle 1 to the goal point Pg by the predetermined distance such that the collision of the traveling device 5, the vehicle body 3, and the working device 2 with the at least one obstacle Q1 or Q2 is avoided. Additionally, the information processor 11 plans the travel route L3 such that at least one of the shortest possible travel time taken for the working vehicle 1 to reach the goal point Pg or the shortest possible travel distance traveled by the working vehicle 1 to reach the goal point Pg is achieved.

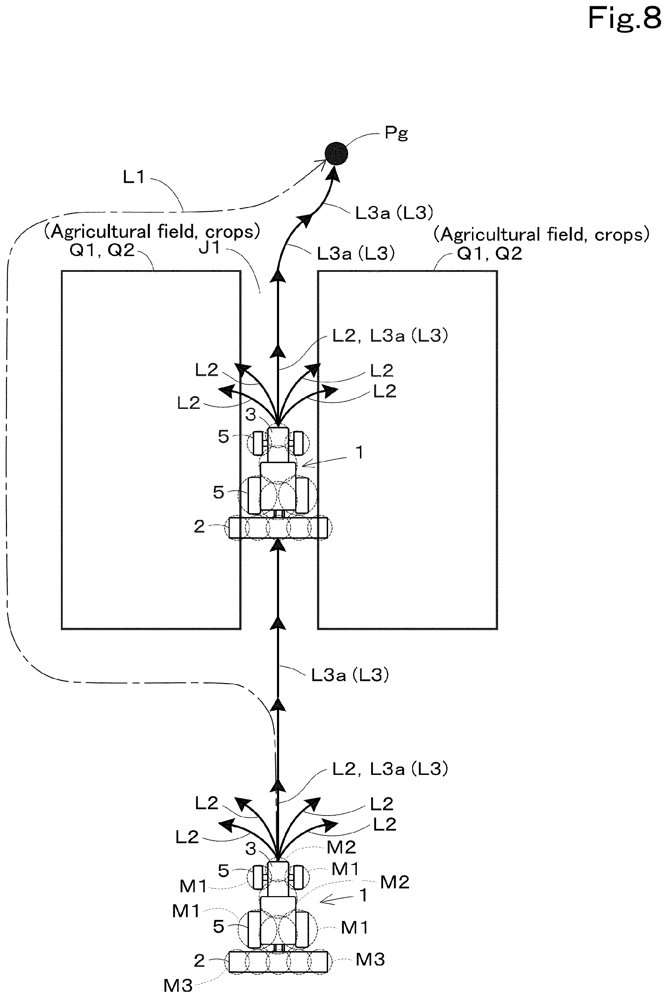

Additionally, the information processor 11 can plan the travel route L3 different from the planned route L1 based on the first collision prediction and the second collision prediction. Specifically, for example, if the planned route L1 is planned (set) such that the planned route L1 does not pass through a passage J1 having a width narrower than that of the working device 2, as long as the obstacles Q2, such as agricultural fields, on opposite sides of the passage J1 are located lower than the working device 2, the information processor 11 can plan the travel route L3 (local route segments L3a) such that the traveling device 5 passes through the passage J1, as illustrated in FIG. 8. Additionally, for example, even if the planned route L1 is planned to pass over a depression (hole) with which the vehicle body 3 and the working device 2 will not collide, the information processor 11 can plan the travel route L3 (local route segments L3a) such that the travel route L3 does not pass over the depression to avoid a collision of the traveling device 5 with the depression.

The information processor 11 and the vehicle controller 12 perform a route following process while the automatic travel of the working vehicle 1 is performed based on the travel route L3 (local route segments L3a). The route following process is a process of causing the working vehicle 1 to travel along the planned travel route L3. In the present embodiment, the route following process uses a pure pursuit algorithm. A technique other than this algorithm may be used.

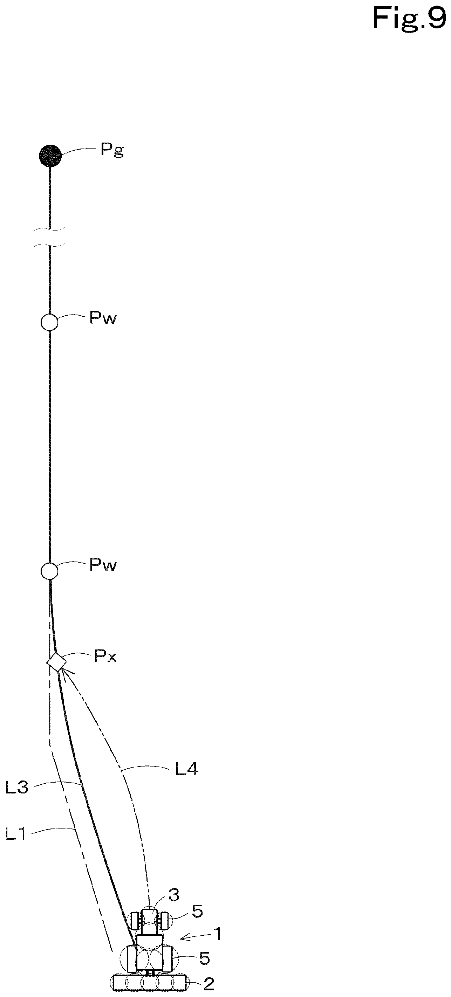

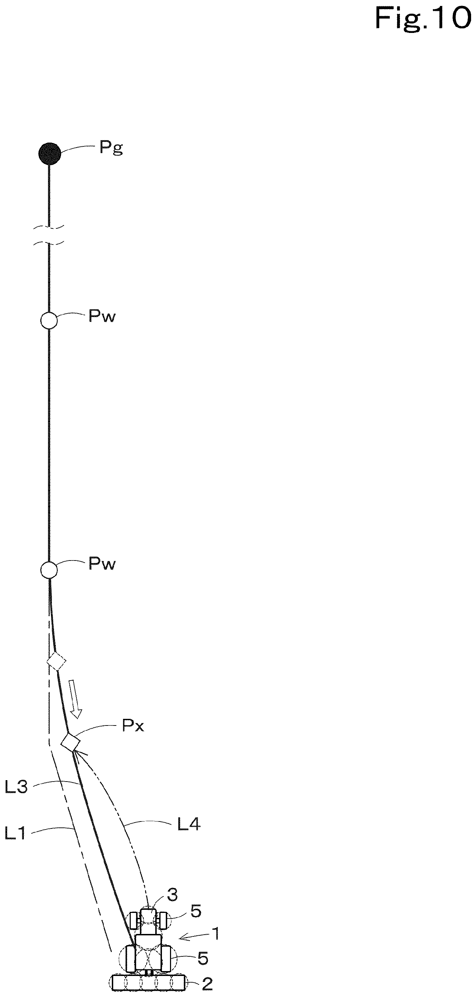

FIGS. 9 and 10 are diagrams for explaining an example route following process. While the automatic travel of the working vehicle 1 is performed based on the travel route L3, the information processor 11 predicts, based on the orientation (direction, yaw angle) of the vehicle body 3, a to-be-traveled route (travel trajectory, estimated route) L4 to be traveled by the working vehicle 1 toward a selected point Px on the travel route L3, as illustrated in FIG. 9. The information processor 11 calculates the orientation of the vehicle body 3 based on, for example, time-series data on the position of the vehicle body 3 detected by the position detector 13c, a measurement result from the inertial measurement unit of the position detector 13c, or a signal output from a predetermined sensor included in the sensor unit 16. The selected point Px on the travel route L3 is at a third distance from the current position of the vehicle body 3 in the traveling direction of the working vehicle 1. The third distance is set to be shorter than the distance of the travel route L3 and the first distance in which the sensing assembly 13d senses a region.

The information processor 11 connects the selected point Px to the position of the vehicle body 3 (the current position of the center of the vehicle body 3) with a straight line, and calculates the difference between the direction of the straight line and the orientation (direction) of the vehicle body 3. The information processor 11 then calculates a turning radius based on the difference and a predetermined equation, creates an arc that connects the selected point Px to the position of the vehicle body 3 with the turning radius, and determines the arc as a to-be-traveled route L4.

Upon predicting the to-be-traveled route L4 in the above-described manner, the information processor 11 performs the first collision prediction and the second collision prediction for a case where the working vehicle 1 travels along the to-be-traveled route L4. At this time, the information processor 11 performs the first collision prediction and the second collision prediction based on the vehicle information, the area information, the position of the vehicle body 3 detected by the position detector 13c, and a sensing result from the sensing assembly 13d.

When the obstacles Q1 and Q2 are not located on or near the to-be-traveled route L4 (within a predetermined distance from the to-be-traveled route L4), the information processor 11 determines that the first collision prediction and the second collision prediction indicate that the collision of the traveling device 5, the vehicle body 3, and the working device 2 with the obstacles Q1 and Q2 is unlikely. In this case, the information processor 11 causes the vehicle controller 12 to continue the automatic travel of the working vehicle 1. In other words, the vehicle controller 12 continues the automatic travel such that the working vehicle 1 travels along the to-be-traveled route L4.

Additionally, when at least one of the obstacle Q1 or the obstacle Q2 is located on or near the to-be-traveled route L4, the information processor 11 determines that at least one of the first collision prediction or the second collision prediction indicates that the collision of any of the traveling device 5, the vehicle body 3, and the working device 2 with the obstacle Q1 or Q2 is likely. In this case, the information processor 11 moves the selected point Px along the travel route L3 by a fourth distance toward the vehicle body 3, as illustrated in FIG. 10. The fourth distance is set to be shorter than the above-described third distance.

Upon moving the selected point Px, the information processor 11 predicts the to-be-traveled route L4, which is to be traveled by the working vehicle 1 toward the selected point Px, again in the above-described manner, and performs the first collision prediction and the second collision prediction again for the case where the working vehicle 1 travels along the to-be-traveled route L4. When the first collision prediction and the second collision prediction indicate that the collision of the traveling device 5, the vehicle body 3, and the working device 2 with the obstacles Q1 and Q2 is unlikely, the information processor 11 outputs, to the vehicle controller 12, a following command to cause the working vehicle 1 to travel along the to-be-traveled route L4 predicted again toward the moved selected point Px. The following command contains information indicating the position of the moved selected point Px.

In response to receiving the following command, the vehicle controller 12 controls travel (steering, traveling speed) of the working vehicle 1 based on the following command, and causes the working vehicle 1 to travel along the to-be-traveled route L4 toward the moved selected point Px. When the vehicle body 3 arrives at the moved selected point Px, the vehicle controller 12 continues the automatic travel such that the working vehicle 1 moves along the travel route L3.

Additionally, after moving the selected point Px, the information processor 11 performs the first collision prediction and the second collision prediction for a case where the working vehicle 1 travels along the predicted to-be-traveled route L4. When the first collision prediction and the second collision prediction indicate that the collision of any of the traveling device 5, the vehicle body 3, and the working device 2 with the at least one obstacle Q1 or Q2 is likely, the information processor 11 further moves the selected point Px along the travel route L3 by the fourth distance toward the vehicle body 3. Additionally, the information processor 11 performs prediction of the to-be-traveled route L4, the first collision prediction, and the second collision prediction again. Based on a result of the first collision prediction and the second collision prediction, the information processor 11 performs output of the above-described following command, movement of the selected point Px, or the like.

After that, when a distance from the position of the vehicle body 3 to the moved selected point Px is equal to or less than a threshold, the information processor 11 outputs a stop command to stop the automatic travel of the working vehicle 1 to the vehicle controller 12. In response to receiving the stop command, the vehicle controller 12 stops the automatic travel of the working vehicle 1 to halt the working vehicle 1. In other words, if the selected point Px is moved by a predetermined limit distance, as long as the collision of any of the traveling device 5, the vehicle body 3, and the working device 2 with the at least one obstacle Q1 or Q2 is predicted as being likely, the automatic travel of the working vehicle 1 is stopped.

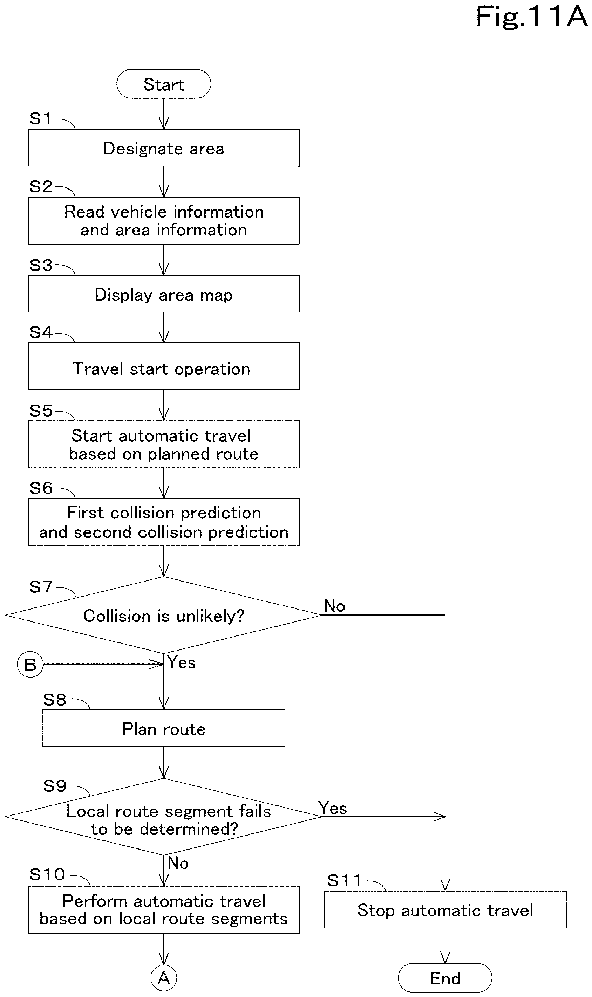

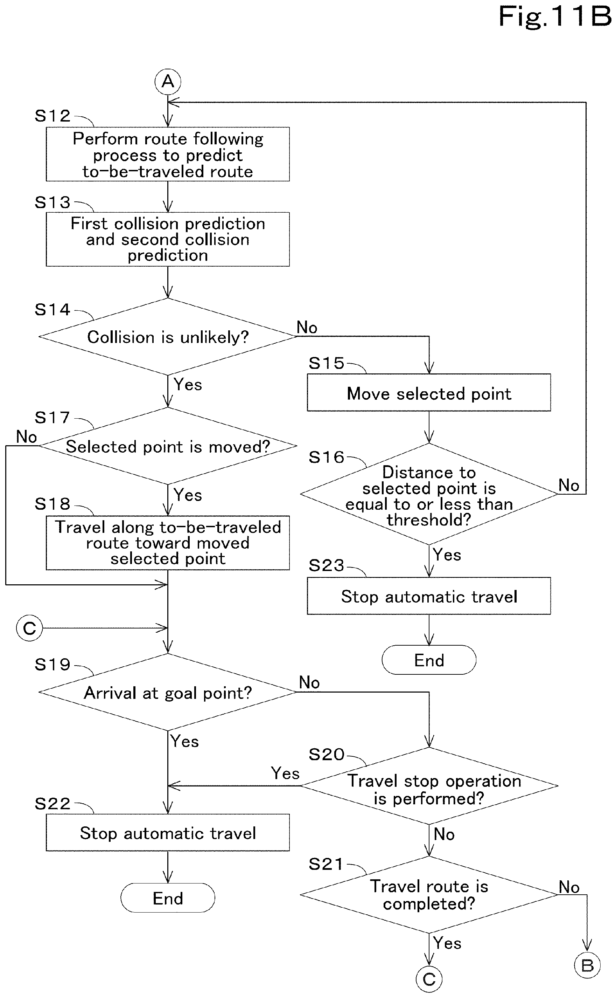

FIGS. 11A and 11B illustrate a flowchart illustrating an example operation of the automatic travel assistance system 100, and illustrate the operations of the above-described information processor 11 and vehicle controller 12. Each step illustrated in FIGS. 11A and 11B is executed by at least one of the information processor 11 or the vehicle controller 12 based on the software programs stored in the internal memories of the information processor 11 and the vehicle controller 12.

When an area is designated by inputting information indicating the area through the user interface 13a of the working vehicle 1 (S1 in FIG. 11A), the information processor 11 and the vehicle controller 12 read vehicle information and area information associated with the input information from the storage 18 (S2). The information processor 11 then causes the user interface 13a to display a map of the area based on the area information (S3). At this time, a passage and the obstacles Q1 and Q2 in the area, the goal point Pg in the area, the planned route L1 to the goal point Pg, and the like are displayed on the map of the area.

Subsequently, when the predetermined travel start operation to cause the working vehicle 1 to travel automatically toward the goal point Pg is performed through at least one of the user interface 13a or any manual operator of the operation unit 17 (S4), the vehicle controller 12 starts automatic travel of the working vehicle 1 based on the planned route L1, the position of the vehicle body 3 detected by the position detector 13c, and the like (S5). Additionally, as described above, the information processor 11 performs the first collision prediction and the second collision prediction based on the vehicle information and the area information (S6).

For example, when the obstacles Q1 and Q2 are located near any of the via points Pw on the planned route L1 and at least one of the first collision prediction or the second collision prediction indicates that the collision of the traveling device 5, the vehicle body 3, and the working device 2 with the at least one obstacle Q1 or Q2 is likely (NO at S7), the information processor 11 outputs a stop command to the vehicle controller 12. Thus, the vehicle controller 12 stops the automatic travel of the working vehicle 1 in response to the stop command (S11). Additionally, the working vehicle 1 halts without reaching the goal point Pg.

When the first collision prediction and the second collision prediction indicate that the collision of the traveling device 5, the vehicle body 3, and the working device 2 with the obstacles Q1 and Q2 is unlikely (YES at S7), the information processor 11 performs the route planning process (S8). At this time, the information processor 11 sets, as a local goal, either one of the via points Pw on the planned route L1 that is the closest to the position of the vehicle body 3 or one of the via points Pw that is at a predetermined distance from the position of the vehicle body 3, and determines a plurality of local route segments L3a to the local goal based on the first collision prediction and the second collision prediction in the above-described manner.

At this time, when the information processor 11 fails to create any provisional route segment L2 described above and fails to determine a local route segment L3a for the local goal (YES at S9), the information processor 11 outputs a stop command to the vehicle controller 12. Thus, the vehicle controller 12 stops the automatic travel of the working vehicle 1 in response to the stop command (S11).

Alternatively, when the information processor 11 creates at least one provisional route segment L2 and successfully determines a plurality of local route segments L3a to the local goal (NO at S9), the information processor 11 outputs information indicating the local route segments L3a to the vehicle controller 12. Thus, the vehicle controller 12 performs (continues) the automatic travel of the working vehicle 1 based on, for example, the local route segments L3a, instead of the planned route L1 (S10).

The information processor 11 then performs the above-described route following process to predict the to-be-traveled route L4 to be traveled by the working vehicle 1 toward the selected point Px on the travel route L3 (local route segments L3a) (S12 in FIG. 11B). Additionally, as described above, the information processor 11 performs the first collision prediction and the second collision prediction for the case where the working vehicle 1 travels along the to-be-traveled route L4 (S13). Furthermore, when the first collision prediction and the second collision prediction indicate that the collision of the traveling device 5, the vehicle body 3, and the working device 2 with the obstacles Q1 and Q2 is unlikely (YES at S14), as long as the selected point Px is not moved (NO at S17), the information processor 11 determines the position of the vehicle body 3.

If the position of the vehicle body 3 has not reached the goal point Pg yet (NO at S19) and a predetermined travel stop operation to stop the automatic travel of the working vehicle 1 is not performed (NO at S20), the information processor 11 determines whether the travel route L3 is completed. At this time, if the local route segments L3a have not reached the goal point Pg and the travel route L3 is not completed (NO at S21), the information processor 11 repeatedly executes step S8 and the subsequent steps in FIG. 11A.

Additionally, when at least one of the first collision prediction or the second collision prediction indicates that the collision of any of the traveling device 5, the vehicle body 3, and the working device 2 with the at least one obstacle Q1 or Q2 is likely (NO at S14 in FIG. 11B), the information processor 11 moves the selected point Px along the travel route L3 by the fourth distance toward the vehicle body 3 (S15). The information processor 11 then calculates a distance from the position of the vehicle body 3 to the moved selected point Px. If the distance is greater than the threshold (NO at S16), the information processor 11 predicts the to-be-traveled route L4 to be traveled by the working vehicle 1 toward the selected point Px again (S12). Additionally, the information processor 11 performs the first collision prediction and the second collision prediction again for the case where the working vehicle 1 travels along the to-be-traveled route L4 (S13).

When the first and second collision predictions performed again indicate that the collision of the traveling device 5, the vehicle body 3, and the working device 2 with the obstacles Q1 and Q2 is unlikely (YES at S14), the information processor 11 outputs, to the vehicle controller 12, a following command to cause the working vehicle 1 to travel along the to-be-traveled route L4 predicted again toward the moved selected point Px. Thus, the vehicle controller 12 causes, in response to the following command, the working vehicle 1 to travel along the to-be-traveled route L4 toward the moved selected point Px (S18). After that, the information processor 11 repeatedly executes step S19 and the subsequent steps.

Additionally, when at least one of the first collision prediction or the second collision prediction predicted again indicates that the collision of at least one of the traveling device 5, the vehicle body 3, or the working device 2 with the at least one obstacle Q1 or Q2 is likely (No at S14), the information processor 11 moves the selected point Px by the fourth distance again (S15). Then, if a distance from the position of the vehicle body 3 to the moved selected point Px is greater than the threshold (NO at S16), the information processor 11 repeatedly executes step S12 and the subsequent steps.

Then, after moving the selected point Px one or more times (S15), if a distance from the position of the vehicle body 3 to the moved selected point Px is equal to or less than the threshold (YES at S16), the information processor 11 outputs a stop command to the vehicle controller 12. In response to the stop command, the vehicle controller 12 stops the automatic travel of the working vehicle 1 (S23). In other words, after the selected point Px is repeatedly moved by the fourth distance toward the vehicle body 3, as long as a to-be-traveled route with the first collision prediction and the second collision prediction indicating that the collision is unlikely is not predicted, the information processor 11 stops the automatic travel of the working vehicle 1. Thus, the working vehicle 1 halts without reaching the goal point Pg.

Additionally, after the first and second collision predictions performed again indicate that the collision of the traveling device 5, the vehicle body 3, and the working device 2 with the obstacles Q1 and Q2 is unlikely (YES at S14), the information processor 11 executes steps S17 to S20. Then, after determining that the local route segments L3a reach the goal point Pg and the travel route L3 is completed (YES at S21), the information processor 11 waits for the arrival of the vehicle body 3 at the goal point Pg.

After that, when the position of the vehicle body 3 arrives at the goal point Pg (YES at S19), the information processor 11 outputs a stop command to the vehicle controller 12. In response to the stop command, the vehicle controller 12 stops the automatic travel of the working vehicle 1 (S22).

Before the position of the vehicle body 3 arrives at the goal point Pg (NO at S19), if the predetermined travel stop operation is performed through at least one of the user interface 13a or any manual operator of the operation unit 17 (YES at S20), the information processor 11 outputs a stop command to the vehicle controller 12. The vehicle controller 12 stops the automatic travel of the working vehicle 1 (S22).

The above embodiment has described the example in which the travel route L3 is planned by performing the route planning process during automatic travel of the working vehicle 1. This does not imply any limitation. Before start of automatic travel of the working vehicle 1, the information processor 11 may perform the route planning process, perform the first collision prediction and the second collision prediction based on vehicle information, area information, and the like, and plan the travel route L3 based on the first collision prediction, the second collision prediction, and the like (including the vehicle information and further including the area information).

Additionally, the information processor 11 may determine, as a planned route L1, the travel route L3 planned before the start of the automatic travel as described above. In other words, the information processor 11 may perform the first collision prediction and the second collision prediction based on the vehicle information, the area information, and the predetermined condition, and plan the planned route L1 (travel route L3) based on the first collision prediction, the second collision prediction, and the like.

Furthermore, the information processor 11 may perform the route planning process based on the planned route L1 planned as described above, the position of the vehicle body 3 detected by the position detector 13c, and the like after the start of the automatic travel of the working vehicle 1 (while the automatic travel is performed). Additionally, in the route planning process, the information processor 11 may perform the first collision prediction and the second collision prediction based on the vehicle information including the position of the vehicle body 3, the area information including a sensing result from the sensing assembly 13d, and the like, and plan (create) the travel route L3 based on the first collision prediction, the second collision prediction, and the like. In other words, while the automatic travel is performed, the information processor 11 may update, based on the first collision prediction, the second collision prediction, and the like, the travel route L3 planned before the start of the automatic travel of the working vehicle 1.

The above embodiment has described the example in which the information processor 11 and the vehicle controller 12 are provided in or on the working vehicle 1. This does not imply any limitation. The information processor 11 and the vehicle controller 12 may be provided in or on the management server 20 or may be provided in or on a remote device (terminal device) configured to remotely operate or monitor the working vehicle 1. Additionally, the remote device may be the terminal device 30. Additionally, the information processor 11 and the vehicle controller 12 may be a computer, such as the terminal device 30, provided outside the working vehicle 1. In other words, the information processor 11 and the vehicle controller 12 may be provided in or on at least one of the working vehicle 1, a server configured to communicate with the working vehicle 1, or a terminal device configured to communicate with the working vehicle 1. Additionally, the information processor 11 and the vehicle controller 12 may be provided in or on different devices or machines.

Additionally, the input interface (the user interfaces 13a and 32, the communication unit 13b, the position detector 13c, and the sensing assembly 13d) to receive input of vehicle information and area information may be provided in or on the working vehicle 1, the management server 20, the terminal device 30, the above-described remote device, and another device or machine. Additionally, a computer may be configured to operate as the information processor 11 and the vehicle controller 12. Additionally, if the input interface, the information processor 11, and the vehicle controller 12 are provided in or on the working vehicle 1, the management server 20 and the terminal device 30 may be omitted from the automatic travel assistance system 100.

Example embodiments of the present invention provide automatic travel assistance systems 100 including configurations described in the following items and the following advantages.

(Item 1) An automatic travel assistance system 100 to assist a working vehicle 1 in performing automatic travel, the working vehicle 1 including a traveling device 5 to cause a vehicle body 3 to travel and being configured to attach thereto a working device 2 to perform work, the automatic travel assistance system 100 including an input interface 13a, 32, 13b, 13c, 13d (user interface 13a, 32, communication interface 13b, position detector 13c, sensing assembly 13d) to receive input of vehicle information relating to at least one of the vehicle body 3 or the working device 2 and relating to the traveling device 5, and area information relating to a goal point Pg and at least one obstacle Q1, Q2 in a predetermined area E1, and an information processor 11 configured to, based on the vehicle information and the area information, perform a first collision prediction to predict a likelihood that the traveling device 5 will collide with the at least one obstacle Q1, Q2 in a case where the working vehicle 1 travels in the area E1 toward the goal point Pg, and a second collision prediction to predict a likelihood that at least one of the vehicle body 3 or the working device 2 will collide with the at least one obstacle Q1, Q2 in the case where the working vehicle 1 travels in the area E1 toward the goal point Pg, and based on the first collision prediction and the second collision prediction, plan a travel route L3 for the working vehicle 1 such that the collision of the traveling device 5, the vehicle body 3, and the working device 2 attached to the vehicle body 3 with the at least one obstacle Q1, Q2 is avoided.

Such a configuration described in the above item 1 allows the working vehicle 1 to perform the automatic travel based on the travel route L3, thus avoiding a collision of the traveling device 5, the vehicle body 3, and the working device 2 with the at least one obstacle Q1 or Q2 with a sufficient time margin. This can reduce the frequency with which avoidance operations such as steering, decelerating, and stopping to avoid the collision are suddenly performed. This enables efficient, automatic travel of the working vehicle 1 toward the goal point Pg. Additionally, the travel route L3 is planned based on two kinds of collision predictions, the first collision prediction to predict a likelihood of collision between the traveling device 5 on the ground and the at least one obstacle Q1 or Q2 at the ground surface and the second collision prediction to predict a likelihood of collision between at least one of the vehicle body 3 or the working device 2 located higher than the traveling device 5 and the at least one obstacle Q1 or Q2 above the ground surface. Therefore, for example, when the collision of the traveling device 5, the vehicle body 3, and the working device 2 with the at least one obstacle Q1 or Q2 is predicted as being unlikely even in a passage J1 having a width wider than that of the working device 2 (FIG. 4), the travel route L3 can be created on the passage J1. This can increase the flexibility in planning the travel route L3. Additionally, the information processor 11 can plan the travel route L3 for the working vehicle 1 based on, of the vehicle information and the area information, at least the vehicle information in addition to the first collision prediction and the second collision prediction such that the collision of the traveling device 5, the vehicle body 3, and the working device 2 with the at least one obstacle Q1 or Q2 is more reliably avoided.

(Item 2) The automatic travel assistance system 100 according to item 1, wherein the information processor 11 is configured to perform the first collision prediction and the second collision prediction and plan the travel route L3 for a case where the working vehicle 1 travels in the area E1 toward the goal point Pg while the working device 2 is not performing work, and the automatic travel assistance system 100 further comprises a vehicle controller 12 configured to control travel of the working vehicle 1 based on the travel route L3 to perform the automatic travel.

Such a configuration described in the above item 2 allows the vehicle controller 12 to perform the automatic travel of the working vehicle 1 based on the travel route L3, thus avoiding the collision of the traveling device 5, the vehicle body 3, and the working device 2 with the at least one obstacle Q1 or Q2 with a sufficient time margin. This enables efficient, automatic travel of the working vehicle 1 toward the goal point Pg.

(Item 3) The automatic travel assistance system 100 according to item 1 or 2, wherein the vehicle information includes pieces of information indicating (i) a size of at least one of the vehicle body 3 or the working device 2, (ii) a size of the traveling device 5, (iii) a position of the traveling device 5 or positions of the traveling device 5 and the working device 2 relative to the vehicle body 3, and (iv) a height of at least one of the vehicle body 3 or the working device 2 from a bottom of the traveling device 5, the area information includes pieces of information indicating (i) positions of a passage J1, the goal point Pg, and the at least one obstacle Q1, Q2 in the area E1, and (ii) a height of the at least one obstacle Q1, Q2 from a ground surface, and the information processor 11 is configured to perform the first collision prediction including predicting a likelihood that at least one of a wheel 5F, 5R or a crawler track of the traveling device 5 will collide with the at least one obstacle Q1, Q2, and perform the second collision prediction including predicting a likelihood that at least one of the vehicle body 3 or the working device 2 will collide with the at least one obstacle Q1, Q2.

Such a configuration described in the above item 3 allows the accuracy of the first collision prediction and the second collision prediction to be improved in both the planar direction and the vertical direction based on the vehicle information and the area information.

(Item 4) The automatic travel assistance system 100 according to any one of items 1 to 3, wherein the information processor 11 is configured to perform the second collision prediction including predicting a likelihood that the vehicle body 3 and the working device 2 attached to the vehicle body 3 will collide with the at least one obstacle Q1, Q2.

Such a configuration described in the above item 4 allows the travel route L3 toward the goal point Pg to be planned based on the second collision prediction and the first collision prediction such that the collision of the traveling device 5, the vehicle body 3, and the working device 2 with the at least one obstacle Q1 or Q2 is avoided. Additionally, the configuration allows the working vehicle 1 to automatically travel based on the travel route L3, thus reliably avoiding the collision of the vehicle body 3, the working device 2, and the traveling device 5 with the at least one obstacle Q1 or Q2. This enables efficient, automatic travel of the working vehicle 1 toward the goal point Pg. Additionally, in the case where the working vehicle 1 travels while the working device 2 is not performing work, the working device 2 is set at a position at which the working device 2 is not in contact with the ground to reduce or eliminate interference with the travel. Thus, the second collision prediction to predict the likelihood of collision between at least one of the vehicle body 3 or the working device 2 and the at least one obstacle Q1 or Q2 above the ground surface can be performed at a position higher than the first collision prediction to predict the likelihood of collision between the traveling device 5 and the at least one obstacle Q1 or Q2 at the ground surface. This can broaden a range in which the collision of the traveling device 5, the vehicle body 3, and the working device 2 with the at least one obstacle Q1 or Q2 can be predicted, thus avoiding the collision of the traveling device 5, the vehicle body 3, and the working device 2 with the at least one obstacle Q1 or Q2 with a greater time margin. This enables more efficient, automatic travel of the working vehicle 1 toward the goal point Pg.

(Item 5) The automatic travel assistance system 100 according to any one of items 1 to 4, wherein the information processor 11 is configured to perform the first collision prediction and the second collision prediction based on (i) a planned route L1 for the working vehicle 1 toward the goal point Pg planned based on a predetermined condition, (ii) the vehicle information, and (iii) the area information, and plan the travel route L3 based on the first collision prediction and the second collision prediction.

Such a configuration described in the above item 5 allows the travel route L3 for efficient travel of the working vehicle 1 toward the goal point Pg to be planned based on the planned route L1 as a guide such that the collision of the traveling device 5, the vehicle body 3, and the working device 2 with the at least one obstacle Q1 or Q2 is avoided.

(Item 6) The automatic travel assistance system 100 according to item 5, wherein the information processor 11 is configured to plan the planned route L1 based on the predetermined condition, the first collision prediction, and the second collision prediction.

Such a configuration described in the above item 6 allows the planned route for travel of the working vehicle 1 toward the goal point Pg to be planned such that the collision of the vehicle body 3, the working device 2, and the traveling device 5 with the at least one obstacle Q1 or Q2 is avoided. This enables efficient, automatic travel of the working vehicle 1 based on the planned route.

(Item 7) The automatic travel assistance system 100 according to item 5 or 6, including a vehicle controller 12 configured to control travel of the working vehicle 1 to perform the automatic travel, wherein the input interface 13a to 13d, 32 includes, a position detector 13c to detect a position of the vehicle body 3, and a sensing assembly 13d to sense a region within a first distance from the working vehicle 1, the vehicle controller 12 is configured to start the automatic travel based on the planned route L1, the information processor 11 is configured to, after the automatic travel is started, perform the first collision prediction and the second collision prediction based on (i) the planned route L1, (ii) the vehicle information, (iii) the area information, (iv) the position of the vehicle body 3, and (v) a sensing result from the sensing assembly 13d, and plan the travel route L3 based on the first collision prediction and the second collision prediction, and the vehicle controller 12 is configured to, when the travel route L3 is planned, perform the automatic travel based on the travel route L3 instead of the planned route L1.

Such a configuration described in the above item 7 allows the accuracy of the first collision prediction and the second collision prediction to be further improved based on the planned route L1, the vehicle information, the area information, time-series data on the position of the vehicle body 3, and actual surroundings of the working vehicle 1 sensed by the sensing assembly 13d while the automatic travel of the working vehicle 1 is performed based on the planned route L1. Additionally, if a new obstacle that is not indicated by the area information is located around the working vehicle 1, the sensing assembly 13d can sense the new obstacle, the first collision prediction and the second collision prediction can be performed to predict a likelihood that the traveling device 5, the vehicle body 3, and the working device 2 will collide with the new obstacle, and the travel route L3 can be planned such that the collision with the new obstacle is avoided.

(Item 8) The automatic travel assistance system 100 according to any one of items 1 to 7, wherein the information processor 11 is configured to, based on the first collision prediction and the second collision prediction, create a plurality of provisional route segments L2 extending in different directions and each extending by a second distance such that the collision is avoided, and determine that one of the plurality of provisional route segments L2 selected based on a predetermined condition is a local route segment L3a of the travel route L3, and determine a next local route segment L3a following the determined local route segment L3a and repeat the determining one or more times to plan the travel route L3.

Such a configuration described in the above item 8 allows the travel route L3 to be completed by extending the local route segment L3a satisfying the predetermined condition by the second distance such that the collision of the traveling device 5, the vehicle body 3, and the working device 2 with the at least one obstacle Q1 or Q2 is avoided.

(Item 9) The automatic travel assistance system 100 according to any one of items 1 to 8, wherein the information processor 11 is configured to plan the travel route L3 based on the first collision prediction and the second collision prediction and based on a predetermined condition.

Such a configuration described in the above item 9 allows the travel route L3 to the goal point Pg to be planned to satisfy the predetermined condition such that the collision of the traveling device 5, the vehicle body 3, and the working device 2 with the at least one obstacle Q1 or Q2 is avoided.

(Item 10) The automatic travel assistance system 100 according to item 5 or 9, wherein the predetermined condition includes a condition in which at least one of a shortest possible travel time taken for the working vehicle 1 to reach the goal point Pg or a shortest possible travel distance traveled by the working vehicle 1 to reach the goal point Pg is achieved.

Such a configuration described in the above item 10 allows the planned route L1 and the travel route L3 to be planned such that at least one of the possible travel time or the possible travel distance is effective.

(Item 11) The automatic travel assistance system 100 according to item 7, wherein the information processor 11 is configured to plan the travel route L3 based on the first collision prediction and the second collision prediction such that the travel route L3 passes through a plurality of via points Pw on the planned route L1.

Such a configuration described in the above item 11 allows the travel route L3 to the goal point Pg to be planned, based on the planned route L1 as a guide, to satisfy the predetermined condition such that the collision of the traveling device 5, the vehicle body 3, and the working device 2 with the at least one obstacle Q1 or Q2 is avoided.

(Item 12) The automatic travel assistance system 100 according to item 8 or 11, including a vehicle controller 12 to control travel of the working vehicle 1 based on the travel route L3 to perform the automatic travel, wherein the input interface 13a to 13d, 32 includes a position detector 13c to detect a position of the vehicle body 3, and a sensing assembly 13d to sense a region within a first distance from the working vehicle 1. The information processor 11 is configured to, while the automatic travel is performed, predict, based on an orientation of the vehicle body 3, a to-be-traveled route L4 to be traveled by the working vehicle 1 toward a selected point Px on the travel route L3, the selected point Px being at a third distance from the position of the vehicle body 3, based on (i) the vehicle information, (ii) the area information, (iii) the position of the vehicle body 3, and (iv) a sensing result from the sensing assembly 13d, perform the first collision prediction and the second collision prediction for a case where the working vehicle 1 travels along the to-be-traveled route L4, and when the first collision prediction and the second collision prediction indicate that the collision is unlikely, cause the vehicle controller 12 to perform the automatic travel such that the working vehicle 1 travels along the to-be-traveled route L4.

Such a configuration described in the above item 12 allows the accuracy of the first collision prediction and the second collision prediction to be further improved based on the vehicle information, the area information, time-series data on the position of the vehicle body 3, and actual surroundings of the working vehicle 1 sensed by the sensing assembly 13d while the automatic travel of the working vehicle 1 is performed based on the travel route L3. Additionally, if a new obstacle that is not indicated by the area information is located on or near the to-be-traveled route L4, the sensing assembly 13d can sense the new obstacle, and the first collision prediction and the second collision prediction can be accurately performed to predict a likelihood that the traveling device 5, the vehicle body 3, and the working device 2 will collide with the new obstacle. Additionally, if the collision of the traveling device 5, the vehicle body 3, and the working device 2 with the obstacle is unlikely, the automatic travel of the working vehicle 1 can be performed along the travel route L3 such that the working vehicle 1 travels along the to-be-traveled route L4.

(Item 13) The automatic travel assistance system 100 according to item 12, wherein the information processor 11 is configured to, when at least one of the first collision prediction or the second collision prediction for the case where the working vehicle 1 travels along the to-be-traveled route L4 indicates that the collision is likely, move the selected point Px along the travel route L3 by a fourth distance toward the vehicle body 3, predict the to-be-traveled route L4 again, and perform the first collision prediction and the second collision prediction again.

In such a configuration described in the above item 13, when the collision of at least one of the traveling device 5, the vehicle body 3, or the working device 2 with the obstacle is likely, the to-be-traveled route L4 may be set such that the collision is avoided, and the working vehicle 1 may be caused to travel to the selected point Px along the to-be-traveled route L4. Thus, the working vehicle 1 can be moved on the travel route L3 and perform the automatic travel along the travel route L3.

(Item 14) The automatic travel assistance system 100 according to item 13, wherein the information processor 11 is configured to, after moving the selected point Px one or more times, when a distance from the moved selected point Px to the position of the vehicle body 3 is equal to or less than a threshold, cause the vehicle controller 12 to stop the automatic travel.

Such a configuration described in the above item 14 allows the automatic travel of the working vehicle 1 to be stopped when a to-be-traveled route that avoids the collision of at least one of the traveling device 5, the vehicle body 3, or the working device 2 with the obstacle fails to be predicted even after the selected point Px is moved to the limit toward the vehicle body 3. This can reliably inhibit the collision.

(Item 15) The automatic travel assistance system 100 according to any one of items 2 to 14, including the working vehicle 1, wherein the input interface 13a to 13d, 32, the information processor 11, and the vehicle controller 12 are provided in or on at least one of the working vehicle 1, a server 20 configured to communicate with the working vehicle 1, or a terminal device 30 configured to communicate with the working vehicle 1.

In such a configuration described in the above item 15, the input interface including the components 13a to 13d and 33, the information processor 11, and the vehicle controller 12 can be provided in or on at least one of the working vehicle 1, the server 20, or the terminal device 30 if desired by the user. This results in improved convenience.

While example embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. An automatic travel assistance system (100) to assist a working vehicle (1) in performing automatic travel, the working vehicle (1) including a traveling device (5) to cause a vehicle body (3) to travel and being configured to attach thereto a working device (2) to perform work, the automatic travel assistance system (100) comprising:
an input interface (13a, 32, 13b, 13c, 13d) to receive input of vehicle information relating to at least one of the vehicle body (3) or the working device (2) and relating to the traveling device (5), and area information relating to a goal point (Pg) and at least one obstacle (Q1, Q2) in a predetermined area (E1); and
an information processor (11) configured to:
based on the vehicle information and the area information, perform a first collision prediction to predict a likelihood that the traveling device (5) will collide with the at least one obstacle (Q1, Q2) in a case where the working vehicle (1) travels in the area (E1) toward the goal point (Pg), and a second collision prediction to predict a likelihood that at least one of the vehicle body (3) or the working device (2) will collide with the at least one obstacle (Q1, Q2) in the case where the working vehicle (1) travels in the area (E1) toward the goal point (Pg); and
based on the first collision prediction and the second collision prediction, plan a travel route (L3) for the working vehicle (1) such that the collision of the traveling device (5), the vehicle body (3), and the working device (2) attached to the vehicle body (3) with the at least one obstacle (Q1, Q2) is avoided.

2. The automatic travel assistance system (100) according to claim 1, wherein
the information processor (11) is configured to perform the first collision prediction and the second collision prediction and plan the travel route (L3) for a case where the working vehicle (1) travels in the area (E1) toward the goal point (Pg) while the working device (2) is not performing work; and
the automatic travel assistance system (100) further comprises a vehicle controller (12) configured to control travel of the working vehicle (1) based on the travel route (L3) to perform the automatic travel.

3. The automatic travel assistance system (100) according to claim 1 or 2, wherein
the vehicle information includes pieces of information indicating (i) a size of at least one of the vehicle body (3) or the working device (2), (ii) a size of the traveling device (5), (iii) a position of the traveling device (5) or positions of the traveling device (5) and the working device (2) relative to the vehicle body (3), and (iv) a height of at least one of the vehicle body (3) or the working device (2) from a bottom of the traveling device (5);
the area information includes pieces of information indicating (i) positions of a passage (J1), the goal point (Pg), and the at least one obstacle (Q1, Q2) in the area (E1), and (ii) a height of the at least one obstacle (Q1, Q2) from a ground surface; and
the information processor (11) is configured to:
perform the first collision prediction including predicting a likelihood that at least one of a wheel (5F, 5R) or a crawler track of the traveling device (5) will collide with the at least one obstacle (Q1, Q2); and
perform the second collision prediction including predicting a likelihood that at least one of the vehicle body (3) or the working device (2) will collide with the at least one obstacle (Q1, Q2).

4. The automatic travel assistance system (100) according to any one of claims 1 to 3, wherein the information processor (11) is configured to perform the second collision prediction including predicting a likelihood that the vehicle body (3) and the working device (2) attached to the vehicle body (3) will collide with the at least one obstacle (Q1, Q2).

5. The automatic travel assistance system (100) according to any one of claims 1 to 4, wherein the information processor (11) is configured to:
perform the first collision prediction and the second collision prediction based on (i) a planned route (L1) for the working vehicle (1) toward the goal point (Pg) planned based on a predetermined condition, (ii) the vehicle information, and (iii) the area information; and
plan the travel route (L3) based on the first collision prediction and the second collision prediction.

6. The automatic travel assistance system (100) according to claim 5, wherein the information processor (11) is configured to plan the planned route (L1) based on the predetermined condition, the first collision prediction, and the second collision prediction.

7. The automatic travel assistance system (100) according to claim 5 or 6, comprising a vehicle controller (12) configured to control travel of the working vehicle (1) to perform the automatic travel; wherein
the input interface (13a to 13d, 32) includes:
a position detector (13c) to detect a position of the vehicle body (3); and
a sensing assembly (13d) to sense a region within a first distance from the working vehicle (1);
the vehicle controller (12) is configured to start the automatic travel based on the planned route (L1);
the information processor (11) is configured to, after the automatic travel is started, perform the first collision prediction and the second collision prediction based on (i) the planned route (L1), (ii) the vehicle information, (iii) the area information, (iv) the position of the vehicle body (3), and (v) a sensing result from the sensing assembly (13d), and plan the travel route (L3) based on the first collision prediction and the second collision prediction; and
the vehicle controller (12) is configured to, when the travel route (L3) is planned, perform the automatic travel based on the travel route (L3) instead of the planned route (L1).

8. The automatic travel assistance system (100) according to any one of claims 1 to 7, wherein the information processor (11) is configured to:
based on the first collision prediction and the second collision prediction, create a plurality of provisional route segments (L2) extending in different directions and each extending by a second distance such that the collision is avoided, and determine that one of the plurality of provisional route segments (L2) selected based on a predetermined condition is a local route segment (L3a) of the travel route (L3); and
determine a next local route segment (L3a) following the determined local route segment (L3a) and repeat the determining one or more times to plan the travel route (L3).

9. The automatic travel assistance system (100) according to any one of claims 1 to 8, wherein the information processor (11) is configured to plan the travel route (L3) based on the first collision prediction and the second collision prediction and based on a predetermined condition.

10. The automatic travel assistance system (100) according to claim 5 or 9, wherein the predetermined condition includes a condition in which at least one of a shortest possible travel time taken for the working vehicle (1) to reach the goal point (Pg) or a shortest possible travel distance traveled by the working vehicle (1) to reach the goal point (Pg) is achieved.

11. The automatic travel assistance system (100) according to claim 7 taken in combination with any of claims 1 to 10, wherein the information processor (11) is configured to plan the travel route (L3) based on the first collision prediction and the second collision prediction such that the travel route (L3) passes through a plurality of via points (Pw) on the planned route (L1).

12. The automatic travel assistance system (100) according to claim 8 or 11, comprising a vehicle controller (12) to control travel of the working vehicle (1) based on the travel route (L3) to perform the automatic travel; wherein
the input interface (13a to 13d, 32) includes:
a position detector (13c) to detect a position of the vehicle body (3); and
a sensing assembly (13d) to sense a region within a first distance from the working vehicle (1);
the information processor (11) is configured to:
while the automatic travel is performed, predict, based on an orientation of the vehicle body (3), a to-be-traveled route (L4) to be traveled by the working vehicle (1) toward a selected point (Px) on the travel route (L3), the selected point (Px) being at a third distance from the position of the vehicle body (3);
based on (i) the vehicle information, (ii) the area information, (iii) the position of the vehicle body (3), and (iv) a sensing result from the sensing assembly (13d), perform the first collision prediction and the second collision prediction for a case where the working vehicle (1) travels along the to-be-traveled route (L4); and
when the first collision prediction and the second collision prediction indicate that the collision is unlikely, cause the vehicle controller (12) to perform the automatic travel such that the working vehicle (1) travels along the to-be-traveled route (L4).

13. The automatic travel assistance system (100) according to claim 12, wherein the information processor (11) is configured to, when at least one of the first collision prediction or the second collision prediction for the case where the working vehicle (1) travels along the to-be-traveled route (L4) indicates that the collision is likely, move the selected point (Px) along the travel route (L3) by a fourth distance toward the vehicle body (3), predict the to-be-traveled route (L4) again, and perform the first collision prediction and the second collision prediction again.

14. The automatic travel assistance system (100) according to claim 13, wherein the information processor (11) is configured to, after moving the selected point (Px) one or more times, when a distance from the moved selected point (Px) to the position of the vehicle body (3) is equal to or less than a threshold, cause the vehicle controller (12) to stop the automatic travel.

15. The automatic travel assistance system (100) according to any one of claims 2 to 14, comprising the working vehicle (1); wherein
the input interface (13a to 13d, 32), the information processor (11), and the vehicle controller (12) are provided in or on at least one of the working vehicle (1), a server (20) configured to communicate with the working vehicle (1), or a terminal device (30) configured to communicate with the working vehicle (1).
